(19) Europäisches Patentamt
European Patent Office
Office européen des brevets

(11) EP 2 822 224 B1

(12) **EUROPÄISCHE PATENTSCHRIFT**

(45) Veröffentlichungstag und Bekanntmachung des Hinweises auf die Patenterteilung:
**07.03.2018 Patentblatt 2018/10**

(51) Int Cl.:
***H04L 12/26*** *(2006.01)* *H04L 12/723* *(2013.01)*

(21) Anmeldenummer: **14175446.5**

(22) Anmeldetag: **02.07.2014**

(54) **Ermitteln von Ein-Wege-Performanzparametern in einem paketvermittelten Kommunikationsteilnetz**

Determination of one-way performance parameters in a packet transfer communication subnet

Détermination de paramètres de performance unidirectionnelle dans un sous-réseau de communication par paquet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.07.2013 DE 102013011223**

(43) Veröffentlichungstag der Anmeldung:
**07.01.2015 Patentblatt 2015/02**

(73) Patentinhaber: **Deutsche Telekom AG**
**53113 Bonn (DE)**

(72) Erfinder: **Geib, Rüdiger**
**64297 Darmstadt (DE)**

(74) Vertreter: **Blumbach · Zinngrebe Patent- und Rechtsanwälte**
**PartG mbB**
**Elisabethenstrasse 11**
**64283 Darmstadt (DE)**

(56) Entgegenhaltungen:
**EP-A1- 2 106 068 WO-A2-2012/110011**

- **KHALED HARFOUSH ET AL: "Measuring capacity bandwidth of targeted path segments", IEEE / ACM TRANSACTIONS ON NETWORKING, IEEE / ACM, NEW YORK, NY, US, vol. 17, no. 1, 1 February 2009 (2009-02-01), pages 80-92, XP058099393, ISSN: 1063-6692, DOI: 10.1109/TNET.2008.2008702**

EP 2 822 224 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft das Ermitteln von Ein-Wege Performanz Parametern in einem paketvermittelten Kommunikationsteilnetz und insbesondere ein Verfahren und ein System, um in einem paketvermittelnden Kommunikationsteilnetz, insbesondere einem MPLS (Multi Protocoll Label Switching) Kommunikationsteilnetz Ein-Wege Performanz Parameter, wie z.B. Paket-Laufzeit, Paket-Laufzeit Variation, Paketverlust und andere Ein-Wege Metriken zwischen Kantenroutern dieses Netzes zu ermitteln.

Hierbei wird von einem Stand der Technik ausgegangen, wie er von der "IP (Internet Protocol) Performance Metrics Work Group" (IPPMWG) der IETF (Internet Engineering Task Force) spezifiziert wird:

- So wird, um eine Ein-Wege Performanz eines zu messenden Pfades zwischen einem ersten Kantenrouter A und einem zweiten Kantenrouter B zu messen, lediglich in einer Richtung entlang eines Pfades von Kantenrouter A Kantenrouter B gemessen, wie z.B. der Veröffentlichung "Framework for IP Performance Metrics", RFC 2330, Mai 1998 von Paxson, D., Almes, G., Mahdavi, J. und M. Mathis zu entnehmen. Die Performanz zwischen zwei Kantenroutern kann jedoch in die eine Richtung anders als in die andere Richtung sein, weil die Pfade sich in den genutzten Netzabschnitten unterscheiden können.

- Um Ein-Wege Laufzeit oder Ein-Wege Laufzeitvariation zu messen, werden Messeinrichtungen an Kantenrouter A und an Kantenrouter B benötigt, wobei darüber hinaus, um die erwähnten Performanz-Metriken zu messen, die internen Uhren der Messeinrichtungen an den Kantenroutern A und B synchronisiert sein müssen. Eine genaue Messung der Laufzeit (LZ) erfordert somit eine hinreichend genaue Synchronisation der Uhren, etwa mit GPS, wie z.B. auch vorgenannter Veröffentlichung des Standes der Technik zu entnehmen.

- Im Internet werden üblicher Weise Methoden zur Lastteilung entlang möglicher gleichwertiger Pfade zwischen zwei Kantenroutern eines Teilnetzes angewandt, wobei Methoden, diese Lastteilung zu umgehen und feste Pfade zwischen zwei Kantenroutern zu verwenden aufwendig sind, wie z.B. auch der Veröffentlichung "Avoiding Equal Cost Multipath Treatment in MPLS Networks", BCP 128 / RFC 4928, Juni 2007 von G. Swallow, S. Bryant und L. Andersson sowie der Veröffentlichung "IP Performance Metrics (IPPM) Standard Advancement Testing", BCP 176 / RFC 6576, März 2012 von R. Geib, A. Morton, R. Fardid und A. Steinmitz zu entnehmen.

- Im Internet ist ein Pfad von einem Kantenrouter A zu einem Kantenrouter B typischer Weise nicht identisch mit dem Pfad von Kantenrouter B zu Kantenrouter A, wobei dies unabhängig davon gilt, ob Kantenrouter A und B an beliebige Teilkommunikationsnetze des Internets angeschaltet sind oder ob sie an dasselbe Teilkommunikationsnetz angeschaltet sind. Es ist dabei ferner unerheblich, ob eines oder alle der Teilkommunikationsnetze auf dem IP-oder MPLS Protokoll basieren, so dass aus der Messung der Performanz im Rückübertragungsverfahren einer Messeinrichtung an Kantenrouter A, der ein Messpaket zu Kantenrouter B sendet, und dieser es ohne Auswertung zurück zu Kantenrouter A und von da zur Messeinrichtung sendet, sich nicht zuverlässig eine Aussage zur Ein-Wege Performanz entlang des Teilabschnitts von Kantenrouter A zu Kantenrouter B bzw. von Kantenrouter B zu Kantenrouter A ergibt, wie z.B. der Veröffentlichung "A Round-trip Delay Metric for IPPM", RFC 2681, September 1999, von G. Almes, S. Kalidindi und M. Zekauskas sowie der vorgenannten Veröffentlichung "IP Performance Metrics (IPPM) Standard Advancement Testing" zu entnehmen.

Aufgabe der Erfindung ist es, einen Weg aufzuzeigen, mit welchem eine Ermittlung einer Ein-Wege Performanz in paketvermittelnden, insbesondere verbindungslosen Kommunikationsteilnetzen zuverlässig ermöglicht wird und der darüber hinaus die oben genannten Nachteile effektiv reduziert.

Die Aufgabe löst die vorliegende Erfindung mit Gegenständen gemäß den in den unabhängigen Ansprüchen definierten Merkmalen. Vorteilhafte Weiterbildungen der vorliegenden Erfindung sind jeweils in den Unteransprüchen angegeben.

Die Erfindung sieht demgemäß ein Verfahren zum Ermitteln von Ein-Wege-Performanz Parametern beim Übertragen eines Pakets in paketvermittelnden Kommunikationsteilnetzen, insbesondere von MPLS Paketen in einem MPLS Kommunikationsteilnetz vor, - bei welchem das Paket auf einer Schleife von einem Absender ausgehend zu einem Ziel und zurück zum Absender übertragen wird, und hierbei eine Anzahl von Routern passiert, wobei ein Router ein innerer Router oder ein Kantenrouter sein kann, der einen Übergang zwischen dem Kommunikationsteilnetz und einem Anschlussnetz oder einen Abschluss des Kommunikationsteilnetzes darstellt, und nach vollständigem Durchlaufen der Schleife ein zu dem zu ermittelnden Ein-Wege-Performanz Parameter gehörender Messwert gemessen wird, der dieser durchlaufenen Schleife insgesamt zugeordnet wird. Alle auf der Schleife zwischen jeweils zwei bestimmten Routern, zwischen denen kein weiterer Router liegen muss, jedoch liegen kann, zu passierenden Routen innerhalb der Schleife für ein Paket werden hierbei bereits vor dessen Übertragung derart festgelegt, dass bei einer Anzahl von n Routen innerhalb der Schleife, in Bezug auf n-1 Routen innerhalb der Schleife bereits auf zu dem zu ermittelnden Ein-Wege-Performanz Parameter entsprechende Ein-Wege-Performanz Eichwerte zurückgegriffen werden kann, und der zu ermittelnde Ein-Wege-Performanz Parameter in Bezug auf die verbleibende Route in funktionaler Abhängigkeit von dem gemessenen Performanz-Messwert der gesamten durchlaufenen Schleife und den Ein-Wege-Performanz Eichwerten der n-1 Routen berechnet wird.

Die folgende Beschreibung beschränkt zwar im Wesentlichen auf die Anwendung der Erfindung zwischen Kantenroutern, kann jedoch auch zwischen beliebigen Routern eines MPLS Netzes eingesetzt werden.

Die Erfindung schlägt hierzu ferner ein Paket Steuersystem zum Übertragen von Paketen in paketvermittelnden Kommunikationsteilnetzen, insbesondere von MPLS Paketen in einem MPLS Kommunikationsteilnetz vor, bei welchem das Paket auf einer Schleife von einem Absender ausgehend zu einem Ziel und zurück zum Absender übertragen wird, und hierbei eine Anzahl von Routern passiert, wobei ein Router ein innerer Router oder ein Kantenrouter sein kann, der einen Übergang zwischen dem Kommunikationsteilnetz und einem Anschlussnetz oder einen Abschluss des Kommunikationsteilnetzes darstellt. Das Steuersystem besitzt hierzu zum Ermitteln von Ein-Wege-Performanz Parametern eines Pakets eine Messeinrichtung, die als Absender an wenigstens einen Router direkt angeschlossen ist oder Teil dieses einen Routers ist, und mit welcher das Steuersystem in der Lage ist, nach vollständigem Durchlaufen der Schleife einen zu dem zu ermittelnden Ein-Wege-Performanz Parameter gehörenden Messwert zu messen und dieser durchlaufenen Schleife insgesamt zu zuordnen. Erfindungsgemäß ist das Steuersystem mit der Messeinrichtung ferner in der Lage, alle auf der Schleife zwischen jeweils zwei bestimmten Routern zu passierenden Routen innerhalb der Schleife für ein Paket bereits vor dessen Übertragung derart fest zu legen, dass bei einer Anzahl von n Routen innerhalb der Schleife, in Bezug auf n-1 Routen innerhalb der Schleife bereits auf zu dem zu ermittelnden Ein-Wege-Performanz Parameter entsprechende Ein-Wege-Performanz Eichwerte zurückgegriffen werden kann, und den zu ermittelnden Ein-Wege-Performanz Parameter in Bezug auf die verbleibende Route in funktionaler Abhängigkeit von dem gemessenen Performanz-Messwert der gesamten durchlaufenen Schleife und den Ein-Wege-Performanz Eichwerten der n-1 Routen zu berechnen.

Neu und ein wesentlicher Vorteil der Erfindung ist somit, dass diese Ein-Wege Performanz Parameter auf vordefinierten Pfaden sowohl in Hin- als auch Rückrichtung mit einer einzigen Messeinrichtung, die an einen (Kanten-)Router oder auch an mehreren (Kanten-)Routern des paketvermittelnden Kommunikationsteilnetzes, insbesondere eines MPLS Kommunikationsteilnetzes, direkt angeschlossen ist, oder Teil eines einzelnen (Kanten-)Routers ist, ermittelt werden können. Die Genauigkeit nur einer messenden Einrichtung legt somit die Genauigkeit der Messung fest, wie z.B. die Genauigkeit von Zeitstempeln, die für Messungen etwa der Laufzeit oder der Laufzeitvariation benötigt werden, nur durch die Genauigkeit der Zeitstempel dieser einen messenden Einrichtung festgelegt wird. Die Erfindung ermöglicht somit eine gezielte Messung entlang von Schleifen, bei denen zweckmäßig für alle enthaltenen Pfade außer dem zu messenden Pfad eine Eichmessung vorliegt.

Ergänzend oder alternativ sieht die Erfindung ferner zweckmäßig ein Verfahren zum Ermitteln von Ein-Wege-Performanz Parameter eines Pakets in paketvermittelnden Kommunikationsteilnetzen, insbesondere von MPLS Paketen in einem MPLS Kommunikationsteilnetz vor, bei welchem zur Ermittlung von Ein-Wege-Performanz Parameter-Eichwerten das Paket auf wenigstens einer Schleife von einem Absender ausgehend zu einem Ziel und zurück zum Absender übertragen wird, und hierbei eine Anzahl von (Kanten-)Routern passiert, wobei ein Router ein innerer Router oder ein Kantenrouter sein kann, der einen Übergang zwischen dem Kommunikationsteilnetz und einem Anschlussnetz oder einen Abschluss des Kommunikationsteilnetzes darstellt, und wobei alle auf einer Schleife zwischen jeweils zwei bestimmten (Kanten-)Routern, zwischen denen kein weiterer Router liegen muss, jedoch liegen kann, zu passierenden Routen innerhalb der Schleife für ein Paket bereits vor dessen Übertragung derart festgelegt werden, dass die Routen von dem Absender ausgehend zu dem Ziel auch als die Routen vom Ziel zurück zum Absender genutzt werden, und dass bei der Ermittlung von Ein-Wege-Performanz Parameter-Eichwerten zu einer Anzahl von n Routen, das Paket nacheinander auf n-1 Schleifen übertragen wird. Hierbei wird eine erste Schleife zur Übertragung des Pakets definiert, welche lediglich die erste Route aus der Anzahl der n Routen sowohl auf dem Hinweg und dem Rückweg beinhaltet, oder welche lediglich die letzte Route aus der Anzahl der n Routen auf dem Hinweg und dem Rückweg beinhaltet, wobei nach Durchlaufen dieser Schleife ein zu dem zu ermittelnden Ein-Wege-Performanz Parameter gehörender Performanz-Wert gemessen wird, der dieser durchlaufenen Schleife insgesamt zugeordnet wird und wobei der halbe Performanz-Wert als Ein-Wege-Performanz Parameter-Eichwert der passierten Route sowohl für Hinweg und dem Rückweg zugeordnet wird, und wobei jede weitere Schleife, welche bis zu der Anzahl von n-1 Schleifen definiert wird, jeweils eine sich an die Routen aus der vorhergehenden Schleife anschließende weitere Route aus der Anzahl der n Routen sowohl auf dem Hinweg und dem Rückweg beinhaltet. Nach Durchlaufen jeder dieser weiteren Schleife wird ein zu dem zu ermittelnden Ein-Wege-Performanz Parameter gehörender Performanz-Messwert gemessen, der jeweils der durchlaufenen Schleife insgesamt zugeordnet wird und wobei der sich an die Routen aus der vorhergehenden Schleife anschließenden weiteren Route sowohl für Hinweg und dem Rückweg jeweils ein Ein-Wege-Performanz Parameter-Eichwert in funktionaler Abhängigkeit dieses gemessenen Performanz-Messwertes und den Ein-Wege-Performanz Parameter-Eichwerten, welche den Routen aus der vorhergehenden Schleife zugeordnet wurden, berechnet und zugeordnet wird. Insbesondere wird ein Ein-Wege-Performanz Parameter-Eichwert berechnet und zugeordnet, der der Hälfte aus der Differenz dieses gemessenen Performanz-Wertes und den Ein-Wege-Performanz Parameter-Eichwerten, welche den Routen aus der vorhergehenden Schleife zugeordnet wurden, entspricht.

Ein hierfür zweckmäßig ausgebildetes Paket Steuersystem zum Übertragen von Paketen in paketvermittelnden Kommunikationsteilnetzen, insbesondere von MPLS Paketen in einem MPLS Kommunikationsteilnetz, nach der Erfindung besitzt wieder zum Ermitteln von Ein-Wege-Performanz Parametern eines Pakets eine Messeinrichtung, wobei zur Ermittlung von Ein-Wege-Performanz Parameter-Eichwerten das Paket auf wenigstens einer Schleife von einem Absender ausgehend zu einem Ziel und zurück zum Absender übertragen wird, und hierbei eine Anzahl von (Kanten-)Routern passiert, wobei ein Router ein innerer Router sein kann oder ein Kantenrouter, der einen Übergang zwischen dem Kommunikationsteilnetz und einem Anschlussnetz oder einen Abschluss des Kommunikationsteilnetzes. Die Messeinrichtung ist wiederum als Absender an wenigstens einen (Kanten-)Router direkt angeschlossen oder ist Teil dieses einen (Kanten-)Routers, und das Steuersystem mit der Messeinrichtung ist in der Lage, alle auf einer Schleife zwischen jeweils zwei bestimmten (Kanten-)Routern zu passierenden Routen innerhalb der Schleife für ein Paket bereits vor dessen Übertragung derart festzulegen, dass die Routen von dem Absender ausgehend zu dem Ziel auch als die Routen vom Ziel zurück zum Absender genutzt werden, und bei der Ermittlung von Ein-Wege-Performanz Parameter-Eichwerten zu einer Anzahl von n Routen, das Paket nacheinander auf n-1 Schleifen zu übertragen. Das Steuersystem mit der Messeinrichtung ist ferner in der Lage, eine erste Schleife zur Übertragung des Pakets zu definieren, welche lediglich die erste Route aus der Anzahl der n Routen sowohl auf dem Hinweg und dem Rückweg beinhaltet, oder welche lediglich die letzte Route aus der Anzahl der n Routen auf dem Hinweg und dem Rückweg beinhaltet, und nach Durchlaufen dieser Schleife einen zu dem zu ermittelnden Ein-Wege-Performanz Parameter gehörender Performanz-Messwert zu messen und diesen der durchlaufenen Schleife insgesamt zuzuordnen und den halben Performanz-Wert als Ein-Wege-Performanz Parameter-Eichwert der passierten Route sowohl für Hinweg und dem Rückweg zu zuordnen, und wobei das Steuersystem mit der Messeinrichtung in der Lage ist, eine jeweils weitere Schleife bis zu der Anzahl von n-1 Schleifen zu definieren, welche jeweils eine sich an die Routen aus der vorhergehenden Schleife anschließende weitere Route aus der Anzahl der n Routen sowohl auf dem Hinweg und dem Rückweg beinhaltet, und nach Durchlaufen jeder dieser weiteren Schleife einen zu dem zu ermittelnden Ein-Wege-Performanz Parameter gehörender Performanz-Wert zu messen und diesen der jeweils durchlaufenen Schleife insgesamt zu zuordnen und der sich an die Routen aus der vorhergehenden Schleife anschließenden weiteren Route sowohl für Hinweg und dem Rückweg jeweils einen Ein-Wege-Performanz Parameter-Eichwert in funktionaler Abhängigkeit dieses gemessenen Performanz-Messwertes und den Ein-Wege-Performanz Parameter-Eichwerten, welche den Routen aus der vorhergehenden Schleife zugeordnet wurden, zu berechnen und zu zuordnen, insbesondere einen Ein-Wege-Performanz Parameter-Eichwert zu berechnen, der der Hälfte aus der Differenz dieses gemessenen Performanz-Messwertes und den Ein-Wege-Performanz Parameter-Eichwerten, welche den Routen aus der vorhergehenden Schleife zugeordnet wurden, entspricht.

Die Erfindung sieht ferner zweckmäßige Ausführungsformen des Verfahrens und des Steuersystems vor, bei welchen zur Ermittlung von Ein-Wege-Performanz Parameter-Eichwerten, die Pakete auf den entsprechenden Routen Überlast-frei übertragen werden und/oder bei welchen zur Ermittlung von Ein-Wege-Performanz Parametern, die Pakete auf den Routen, in Bezug auf welche bereits auf Ein-Wege-Performanz Parameter-Eichwerten zurückgegriffen werden kann, Überlast-frei übertragen werden und/oder bei welchen zur Ermittlung von Laufzeit-abhängigen Ein-Wege-Performanz Parametern beim Versenden des Pakets auf einer Schleife, diesem Paket ein Zeitstempel zugeordnet wird, der nach Durchlaufen der Schleife ausgewertet wird.

Die Erfindungsgemäßen Gegenstände sind somit zweckmäßig zur Vermeidung von Überlast während einer Eichmessung ausgestaltet, und zwar insbesondere durch Eichung und Messung während einer Niedriglastphase oder durch die Verwendung unterschiedlicher QoS (Quality of Service) Klassen zu Eichung (E) und Messung (M) kombiniert mit einer oder mehreren Schleifen, deren Laufzeiten gemessen werden.

Bei der gezielten Messung entlang von Schleifen, bei denen zweckmäßig für alle enthaltenen Pfade außer dem zu messenden Pfad eine Eichmessung vorliegt, wird somit etwa durch Verwendung passender Qualitätsklassen, Überlast entlang der Pfade, zu denen eine Eichmessung vorliegt, vermieden, in dem Eichbedingungen auf den Pfaden sicher gestellt werden, deren Performanz mit einer Eichmessung erfasst wurde.

Im Ergebnis erlaubt die dargestellte Auswertung basierend auf den Mess-Ergebnissen mit den entsprechend gewählten Last- bzw. Weiterleitungsbedingungen während der Messung, die Ein-Wege Performanz eines Pfades insbesondere eines MPLS Teilkommunikationsnetz zu messen bzw. zu berechnen. So liegen vorteilhafter in einer MPLS Mess-Schleife aus i = 1..n Pfaden Eichmesswerte bereits zu i = n-1 Pfaden vor. Mit den bekannten Eichmesswerten und einer Schleife, in der alle n Pfade auftreten, wird aus dem Performanzmesswert der Schleife die Performanz des Pfades i = n i einfacher Weise berechenbar. Eine solche gezielte Messung ist darüber hinaus in verschiedenen QoS Klassen möglich und die erfindungsgemäß Messung und Auswertung ermöglicht die Ein-Wege Performanz Messung von beliebigen Pfaden, insbesondere MPLS Pfaden, ohne dass zwei Messeinrichtungen mit synchronisierten Zeitstempeln etwa durch GPS notwendig sind. Es kann vielmehr vereinfacht der interne Takt einer Messeinrichtung zum Einfügen von Zeitstempeln verwendet werden. Darüber hinaus ermöglicht die Messung und Auswertung ferner Performanz Messungen entlang beliebiger MPLS Pfade, ohne dass eine Performanz-Messeinrichtung an den (Kanten-)Router, der Ursprung oder Ziel dieses Pfades ist, angeschaltet sein muss.

Weitere Vorteile und Merkmale werden anhand der nachfolgenden Beschreibung bevorzugter Ausführungsformen unter Bezugnahme auf die beigefügten Figuren ersichtlich. In den Figuren zeigen:

Fig. 1 skizzenhaft einen möglicher Messaufbau eines nicht weiter dargestellten Steuersystems für Round Trip Messungen zur Berechnung von Ein-Wege Performanz Parametern mit einer Messeinrichtung für MPLS Performanz Messungen,

Fig. 2 skizzenhaft einen alternativen gleichermaßen im Rahmen der Erfindung liegenden, jedoch im Detail nicht weiter betrachteten Messaufbau, und

Fig. 3 skizzenhaft ein Beispiel einer Mess-Schleife zur Durchführung eines erfindungsgemäßen Verfahrens zur Laufzeitmessung für eine Eichmessung.

Für die nachfolgende, beispielhafte Beschreibung der Erfindung anhand bevorzugter Ausführungsformen unter Bezugnahme auf die Figuren sowie für die Ansprüche wird von folgenden Definitionen ausgegangen.

Ein Übertragungsweg beginnt an einem Absender und endet an einem Ziel, wobei mindestens ein Router passiert wird. Ein Router kann hierbei ein Kantenrouter sein, der einen Übergang zwischen einem Kommunikationsteilnetz und einem Anschlussnetz oder einen Abschluss des Kommunikationsteilnetzes darstellt, oder innerhalb des Kommunikationsteilnetzes ein sogenannter innerer Router ("IR Router") bzw. Kern-Router ("Core Router") sein, der als Vermittlungsknoten zur Anwendung kommt.

Eine Schleife beginnt an einem beliebigen, jedoch bestimmten ersten (Kanten-)Router und endet an einem beliebigen, jedoch bestimmten zweiten (Kanten-)Router desselben Teilnetzes.

Ein Pfad bezeichnet die jeweils zu nutzende bzw. genutzte Route, insbesondere die per Standard-MPLS nutzbare Route, zwischen zwei Routern innerhalb einer solchen Schleife. Im Folgenden wird in der Regel eine Umsetzung der Erfindung beschrieben, bei der Routen jeweils zwischen zwei Kantenroutern liegen und zwischen diesen Kantenroutern kein weiterer Kantenrouter liegt, jedoch eine Anzahl von inneren Routern liegen kann.

Eine Mess-Schleife beginnt und endet bei einer selben Messeinrichtung, wobei die Messeinrichtung an einem (Kanten-)Router direkt angeschlossen ist oder Teil dieses (Kanten-)Routers ist oder auch an mehreren (Kanten-)Routern direkt angeschlossen ist, und kann somit im Rahmen der Erfindung eine Kombination nacheinander durchlaufener Pfade sein.

Ferner bildet Grundlage dieser Erfindung die Offenbarung der am 23. August 2012 offengelegten Anmeldung WO 2012/110011 A2 "Schleifen von MPLS Pfaden auf Weiterleitungsebene für verbindungslose MPLS Netze" derselben Anmelderin, welche ein Verfahren und ein Steuersystem zum Übermitteln von MPLS Paketen in verbindungslosen Netzwerken betrifft, wobei das MPLS Paket auf einem Übertragungsweg zwischen einem Absender und einem Ziel eine Anzahl von inneren MPLS Vermittlungsknoten passiert sowie mindestens zwei MPLS Kantenrouter, die jeweils einen Übergang zwischen einem Kernnetzwerk und einem Anschlussnetzwerk darstellen, und wobei ein Adress-Stapel oder Label-Stapel für ein zu versendendes MPLS Paket erzeugt wird, der Adressinformationen zu den auf seinem Übertragungsweg zu passierenden inneren Vermittlungsknoten sowie Adressinformationen für die auf seinem Übertragungsweg zu passierenden Kantenrouter umfasst.

Auf die in dieser Anmeldung WO 2012/110011 A2 beschriebene Methode zur Suche, Erkennung und Nutzung beliebiger Ketten von MPLS Pfaden zwischen beliebigen Kantenroutern eines MPLS Netzes, mit denen MPLS Schleifen konstruiert werden können, wird hier nicht mehr gesondert eingegangen, vielmehr wird die diesbezügliche Offenbarung vollumfänglich als zum Fachwissen gehörend mit in die Offenbarung der vorliegenden Anmeldung mit einbezogen. Die Durchführung von Ein-Wege Performanz Messungen gemäß vorliegender Erfindung für die hier beschriebene MPLS Performanz Messung erfolgt bevorzugt unter Nutzung der Mechanismen gemäß der Anmeldung WO 2012/110011 A2 des obigen Patents.

Die im Folgenden beschriebene Vorgehensweise gilt dementsprechend insbesondere für MPLS Netze, die ihre Label-Cross Connect Tabellen mit LDP (Label Distribution Protocol) erstellen und dabei den Liberal Label Retention Mode nutzen. Weiter ist Lastteilung auf allen gleichwertigen Schleifen nach ECMP (equal-cost multi-path) eine zweckmäßige Annahme und/oder die Unterstützung von MPLS OAM (Operation, Administration and Maintenance) nach RFC4379 (detecting MPLS data plane failures by MPLS- oder IP-echo request/reply Funktion).

Im Prinzip kann das erfindungsgemäße Verfahren und Steuersystem zum Ermitteln von Ein-Wege-Performanz Parametern beim Übertragen eines Pakets in paketvermittelnden Kommunikationsteilnetzen, wobei das Paket auf einer Schleife von einem Absender ausgehend zu einem Ziel und zurück zum Absender übertragen wird, und hierbei eine Anzahl von Routern KRUrsprung, KRZiel1, KRZiel2, IR11, IR22 passiert, wobei ein Router ein innerer Router sein kann oder ein Kantenrouter, der einen Übergang zwischen dem Kommunikationsteilnetz und einem Anschlussnetz oder einen Abschluss des Kommunikationsteilnetzes darstellt, und nach vollständigem Durchlaufen der Schleife ein zu dem zu ermittelnden Ein-Wege-Performanz Parameter gehörender Messwert gemessen wird, der dieser durchlaufenen Schleife insgesamt zugeordnet wird, und wobei alle auf der Schleife zwischen jeweils zwei bestimmten (Kanten-)Routern zu passierenden Routen innerhalb der Schleife für ein Paket bereits vor dessen Übertragung derart festgelegt werden, dass bei einer Anzahl von n Routen innerhalb der Schleife, in Bezug auf n-1 Routen innerhalb der Schleife bereits auf zu dem zu ermittelnden Ein-Wege-Performanz Parameter entsprechende Ein-Wege-Performanz Eichwerte zurückgegriffen werden kann, und der zu ermittelnde Ein-Wege-Performanz Parameter in Bezug auf die verbleibende Route in funktionaler Abhängigkeit von dem gemessenen Performanz-Messwert der gesamten durchlaufenen Schleife und den Ein-Wege-Performanz Eichwerten der n-1 Routen berechnet wird, jedoch allgemein dann eingesetzt werden, wenn die zu durchlaufenden Pfade in der Art nutzbar sind, wie es hier beschrieben wird.

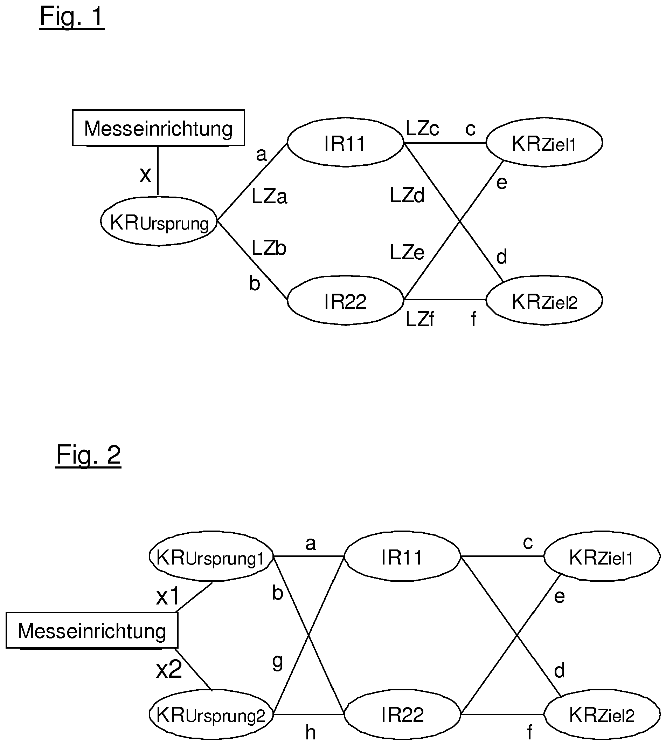

Um die Ein-Wege Performanz einer Schleife, insbesondere einer MPLS Schleife von einem bestimmten Ursprungs-Router zu einem bestimmten Ziel-Router, z.B. von einem Ursprungs-Kantenrouter KRUrsprung (Fign. 1 bis 3) zu einem Ziel-Kantenrouter KRZiel1 oder KRZiel2 (Fign. 1 bis 3), mit einer Messeinrichtung innerhalb eines Steuersystems eines paketvermittelnden, insbesondere verbindungslosen Kommunikationsteilnetzes gemäß der Erfindung zu messen, sind ferner verschiedene Eigenschaften zweckmäßig:

- Um die Paketverlustrate einer Messbeziehung zu erfassen, ist die Messeinrichtung zweckmäßig ausgebildet, von ihm versandte und wieder empfangene Messpakete anhand geeigneter eindeutiger Kenner unterscheiden zu können.

- Für Laufzeit-abhängige Messungen ist die Messeinrichtung zweckmäßig ausgebildet, Messpakete mit einem Zeitstempel zu versehen. Dieser Zeitstempel kann z.B. lokal bei Absenden des Messpakets abgespeichert werden, oder er wird in das Messpaket geschrieben und mit übertragen. Bei Empfang des Messpakets schreibt der Messapparat wiederum zweckmäßig einen Zeitstempel für den Empfang des Messpakets. Das Steuersystem ist somit zusammen mit der Messeinrichtung zweckmäßig in der Lage, zur Ermittlung von Laufzeit-abhängigen Ein-Wege-Performanz Parametern beim Versenden des Pakets auf einer Schleife, diesem Paket einen Zeitstempel zu zuordnen und diesen nach Durchlaufen der Schleife auszuwerten.

- Bei entsprechend der WO 2012/110011 A2 verwendeten MPLS Adress-Stapeln der Messpakete ist in zweckmäßiger Ausführungsform das MPLS Traffic Class Feld jedes MPLS Labels, das z.B. einen Pfad zwischen zwei Kantenroutern einer Messbeziehung adressiert, frei wählbar sein. In einem MPLS Stapel eines Messpakets ist die MPLS Traffic Class je Label zweckmäßig unabhängig von den MPLS Traffic Class Werten anderer Label des MPLS Stapels des Messpakets frei setzbar.

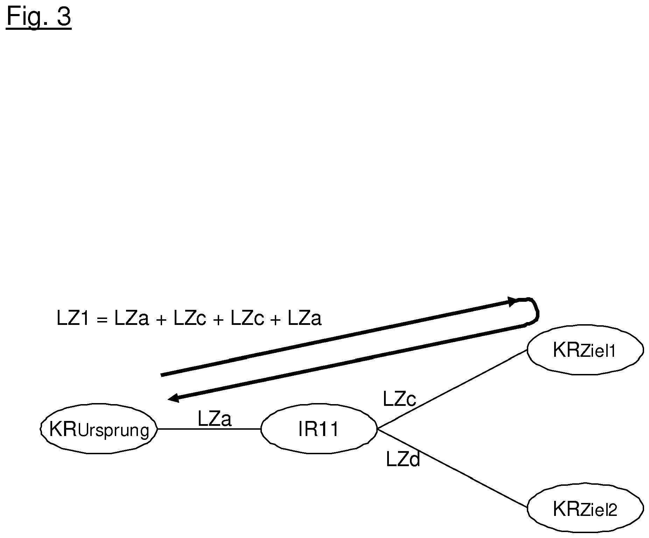

- Die Mess-Schleife, die das Messpaket der Messeinrichtung durch das Teilkommunikationsnetz nutzt, nutzt bevorzugt dieselben internen Router "IR" und Verbindungen auf dem Pfad hin von einem bestimmten Ursprungs-Router, z.B. Ursprungs-Kantenrouter "KRUrsprung", zu einem bestimmten Ziel-Router, z.B. Ziel-Kantenrouter "KRZiel", wie auf dem Pfad von dem Ziel-Router zurück zum Ursprungs-Router. Dies ist in Figur 3 illustriert. Dies ist insbesondere vorteilhaft zur Ermittlung von Ein-Wege-Performanz Parameter-Eichwerten, wenn alle auf einer Schleife zwischen jeweils zwei bestimmten (Kanten-)Routern, zwischen denen kein weiterer Router liegen muss, jedoch eine Anzahl von inneren Routern liegen kann, zu passierenden Routen innerhalb der Schleife für ein Paket bereits vor dessen Übertragung derart festgelegt werden, dass die Routen von dem Absender ausgehend zu dem Ziel auch als die Routen vom Ziel zurück zum Absender genutzt werden, und dass bei der Ermittlung von Ein-Wege-Performanz Parameter-Eichwerten zu einer Anzahl von n Routen, das Paket nacheinander auf n-1 Schleifen übertragen wird, wobei eine erste Schleife zur Übertragung des Pakets definiert wird, welche lediglich die erste Route aus der Anzahl der n Routen sowohl auf dem Hinweg und dem Rückweg beinhaltet, oder welche lediglich die letzte Route aus der Anzahl der n Routen auf dem Hinweg und dem Rückweg beinhaltet, wobei nach Durchlaufen dieser Schleife ein zu dem zu ermittelnden Ein-Wege-Performanz Parameter gehörender Performanz-Wert gemessen wird, der dieser durchlaufenen Schleife insgesamt zugeordnet wird und wobei der halbe Performanz-Wert als Ein-Wege-Performanz Parameter-Eichwert der passierten Route sowohl für Hinweg und dem Rückweg zugeordnet wird, und wobei in jeder weiteren Schleife, welche bis zu der Anzahl von n-1 Schleifen definiert wird, jeweils eine sich an die Routen aus der vorhergehenden Schleife anschließende weitere Route aus der Anzahl der n Routen sowohl auf dem Hinweg und dem Rückweg beinhaltet, wobei nach Durchlaufen jeder dieser weiteren Schleife ein zu dem zu ermittelnden Ein-Wege-Performanz Parameter gehörender Performanz-Messwert gemessen wird, der jeweils der durchlaufenen Schleife insgesamt zugeordnet wird und wobei der sich an die Routen aus der vorhergehenden Schleife anschließenden weiteren Route sowohl für Hinweg und dem Rückweg jeweils ein Ein-Wege-Performanz Parameter-Eichwert in funktionaler Abhängigkeit dieses gemessenen Performanz-Messwertes und den Ein-Wege-Performanz Parameter-Eichwerten, welche den Routen aus der vorhergehenden Schleife zugeordnet wurden, berechnet und zugeordnet wird, wobei insbesondere ein Ein-Wege-Performanz Parameter-Eichwert berechnet und zugeordnet wird, der der Hälfte aus der Differenz dieses gemessenen Performanz-Wertes und den Ein-Wege-Performanz Parameter-Eichwerten, welche den Routen aus der vorhergehenden Schleife zugeordnet wurden, entspricht.

■ Für eine reine Messung von Paketverlust auf einem der Pfade einer Schleife ist zweckmäßig dafür Sorge zu tragen, dass auf den Pfaden, deren Performanz nicht gemessen wird, keine Überlast (Eichbedingung) vorliegt. Eine mögliche Umsetzung ist, für diese nicht zu überlastenden Pfade eine nicht überlastete Quality of Service differenzierende Verkehrsklasse zu nutzen. Hierfür kommen beispielsweise die IETF Verkehrsklassen Expedited Forwarding oder Assured Forwarding in Frage.

■ Auch für eine "Eichmessung" zur Laufzeit ist das Messpaket in vorteilhafter Weise auf identischen Pfaden vom Ursprungs-Router zum Ziel-Router, z.B. vom Ursprungs-Kantenrouter "KRUrsprung" über einen oder mehrere interne Router "IR" zum Ziel-Kantenrouter "KRZiel" hin und wieder zurück zu führen, ohne dass auf einer passierten Schnittstelle Überlast herrscht. Insbesondere wenn beide Bedingungen, d.h. keine Überlast bzw. keine Warteschlange (Eichbedingung) an allen vom Messpaket passierten Schnittstellen und passende Pfade, erfüllt sind, kann wirksam sichergestellt werden, dass das Messpaket mit der physikalisch minimalen Laufzeit entlang der gesamten durchlaufenen Mess-Schleife übertragen wird. Eine mögliche Umsetzung ist, für eine solche Messung auf den Pfaden eine Quality of Service differenzierende Verkehrsklasse zu nutzen, in der keine Warteschlangen auftreten. Hier kommen beispielsweise die IETF Verkehrsklassen Expedited Forwarding oder Assured Forwarding in Frage. Eine andere Umsetzung kann z.B. vorsehen, zu einem Zeitpunkt eine Eichmessung durchzuführen, während dem die Bedingung "keine Überlast für eine Eichmessung" erfüllt ist.

■ Weiter können die zu verwendenden Routen minimal auch nur Pfade zwischen benachbarten Routern identifizieren, so dass nur die notwendigen MPLS Label festgelegt werden müssen, und die IP Adressen der Messpakete frei wählbar sind. Da solche Nutzungen jedoch keine weiteren grundlegenden Ergänzungen bedürfen und für einen Fachmann auf dem hier vorliegenden Gebiet anhand der vorliegenden Offenbarung offensichtlich sind, wird hierauf nicht weiter eingegangen.

Aufbauend auf diesen bevorzugten Ausführungsformen für Messungen gemäß der Erfindung können weitere Performanz-Messungen durchgeführt werden.

Die nachfolgende Beschreibung beschränkt sich im Wesentlichen auf Performanz-Messungen zu Ein-Wege-Laufzeit, Ein-Wege-Laufzeit Variation und Ein-Wege-Paketverlust. Die Nutzung des Verfahrens und/oder des Steuersystems nach der Erfindung zur Messung weiterer Performanz Werte oder zu Stichproben, die nur statistisch ausgewertet werden, liegt im Rahmen der Erfindung. Da solche Nutzungen jedoch keine weiteren grundlegenden Ergänzungen bedürfen und für einen Fachmann auf dem hier vorliegenden Gebiet anhand der vorliegenden Offenbarung offensichtlich sind, wird hierauf nicht weiter eingegangen.

Ein Beispiel für einen Messaufbau eines erfindungsgemäßen Systems zur Durchführung einer Performanz-Messung, insbesondere eine MPLS Performanz-Messung, mit einer Messeinrichtung gemäß der Erfindung zeigt Figur. 1. Die Beschreibung wird im Folgenden im Wesentlichen anhand dieses Messaufbaus dargestellt, bei welchem die Messeinrichtung an einen Kantenrouter KRUrsprung direkt angeschlossen ist. Andere Messarchitekturen sind jedoch im Rahmen der Erfindung einsetzbar, wie z.B. die in Figur 2 dargestellte, bei welcher die Messeinrichtung an mehrere Kantenrouter KRUrsprung1 und KRUrsprung2 direkt angeschlossen ist.

Im vorliegenden Fall einer MPLS Performanz-Messung, ist die Messeinrichtung für ein System nach der Erfindung somit mit der zweckmäßigen Funktionalität für eine MPLS Schleifenmessung gemäß Offenbarung der WO 2012/110011 A2 ausgestattet. Basierend auf einer Architektur gemäß Figur. 1 werden demnach die Adressen des MPLS Label Stapels und der darunter liegenden Ziel-IP Adresse des Messpakets folglich bevorzugt so gewählt, dass eine der in der nachfolgenden Tabelle 1 dargestellten MPLS-Schleifen von einem von der Messeinrichtung auf eine Messschleife versandten Messpaket durchlaufen werden.

Tabelle 1 : MPLS-Schleifen (1) bis (4), die basierend auf Figur. 1 im Rahmen der Erfindung zum Durchlaufen versandter Messpakete genutzt werden.

| MPLS Schleifen, die die Messeinrichtung nutzt: |
|---|
| (1) KRUrsprung → KRZiel1 → KRUrsprung |
| (2) KRUrsprung → KRZiel2 → KRUrsprung |
| (3) KRUrsprung → KRZiel1 → KRZiel2 → KRUrsprung |
| (4) KRUrsprung → KRZiel2 → KRZiel1 → KRUrsprung |

Soll z.B. die MPLS Schleife (1) gemäß Tabelle 1 von einem Messpaket durchlaufen werden, wird der zu nutzende Pfad durch die Schleife von der Messeinrichtung durch die passende Wahl der IP Ziel-Adresse des MPLS OAM Pakets so festgelegt, dass z.B. zunächst die Laufzeit für die Pfade "ac" und "ca" gemessen wird, welche gemäß der nachfolgenden Tabelle 2 als Laufzeit "LZ11" definiert werden kann und sich aus den jeweiligen Einzellaufzeiten der Stecken "a" und "c", nachfolgend als LZa und LZc, für die Pfade "ac" und "ca" zusammensetzt. Die IP Ziel-Adresswahl basiert hierbei bevorzugt auf Standard-Funktionen des MPLS Ping und wird somit nicht näher beschrieben.

Tabelle 2: einige beispielhafte messbare Laufzeiten auf verschiedenen Pfaden entlang der ersten drei MPLS-Schleifen aus Tabelle 1

| Messbare Laufzeiten entlang der MPLS Schleifen sind: |
| --- |
| LZ11 = LZa + LZc + LZc + LZa Schleife (1) |
| LZ21 = LZa + LZd + LZd + LZa Schleife (2) |
| LZ12 = LZb + LZe + LZe + LZb Schleife (1) |
| LZ22 = LZb + LZf + LZf + LZb Schleife (2) |
| LZ5 = LZa + LZc + LZe + LZb Schleife (1) |
| LZ6 = LZa + LZd + LZf + LZb Schleife (2) |
| LZ71 = LZa + LZc + LZc + LZd + LZf + LZb Schleife (3) |
| LZ72 = LZa + LZc + LZe + LZf + LZf + LZb Schleife (3) |
| LZ81 = LZb + LZe + LZc + LZd + LZf + LZb Schleife (3) |
| LZ82 = LZb + LZe + LZe + LZf + LZf + LZb Schleife (3) |
| LZ91 = LZa + LZc + LZc + LZd + LZd + LZa Schleife (3) |
| LZ92 = LZa + LZc + LZe + LZf + LZd+ LZa Schleife (3) |
| LZ101 = LZb + LZe + LZc + LZd + LZd + LZa Schleife (3) |
| LZ102 = LZb + LZe + LZe + LZf + LZd+ LZa Schleife (3) |

Wenn nur der Paketverlust in einer QoS Klasse M (Messung) auf dem Pfad "ac" z.B. der MPLS-Schleife (1) nach Tabelle 1, d.h. auf einem bestimmten Weg dieser Schleife von KRUrsprung zu KRZiel1, gemessen werden soll, dann muss die Traffic Class des MPLS Labels, mit dem das Messpaket vom KRUrsprung auf dem Pfad "ac" zum KRZiel1 gesendet wird, so gewählt werden, dass das Messpaket auf dem Pfad "ac" der QoS Klasse M zugeordnet wird. Auf dem Pfad "ca" der MPLS-Schleife (1) nach Tabelle 1, d.h. auf dem Rückweg dieser Schleife von KRZiel1 zu KRUrsprung, muss das Paket in einer QoS Klasse E (Eichbedingung) ohne Überlast transportiert werden. Deshalb muss die Traffic Class des MPLS Labels, mit das Messpaket vom KRZiel1 auf dem Pfad "ca" zum KRUrsprung gesendet wird, so gewählt werden, dass das Messpaket auf dem Pfad "ca" der QoS Klasse E zugeordnet wird.

Wenn der Paketverlust in QoS Klasse M auf dem Pfad "ca" gemessen werden soll, wird für das Messpaket auf dem Pfad "ca" folglich die QoS Klasse M vorgegeben und auf dem Pfad "ac" die QoS Klasse E. Entsprechend kann der Paketverlust auch auf Pfaden von anderen MPLS-Schleifen nach Tabelle 1 gemessen werden.

Wenn die minimale Ein Wege Laufzeit eines Pfades für eine Eichmessung, d.h. unter Eichbedingung, gemessen werden soll, muss das zu verwendende Messpaket, wie bereits erwähnt, in vorteilhafter Weiterbildung identische Pfade auf dem Hin- und Rückweg, also z.B. "ca" und "ac" nutzen. Für das Eich-Messpaket wird dann auf beiden Pfaden die überlastfreie Verkehrsklasse E verwendet.

Nachfolgend werden unter Bezugnahme auf die Fign. 1 und 3 Eichmessung, d.h. Messungen zum Erhalt von Ein-Wege-Performanz-Eichwerten, zunächst hinsichtlich der Mess-Schleife (1) der Tabelle 1 betrachtet. Die Schleife (1) kann grundsätzlich mit vier verschiedenen Pfadvarianten innerhalb einer Mess-Schleife realisiert werden.

Diese sind die Pfadvarianten "ac" und "ca", "ac" und "eb", "be" und "eb" sowie "be" und "ca".

Wie vorstehend aufgezeigt, sieht die Erfindung vor, dass zum Zeitpunkt der Eichmessung zweckmäßiger Weise keine der vom Messpaket passierten Schnittstellen überlastet ist, d.h. es dürfen keine Pakete in einem Puffer eines Routers für länger zwischengespeichert werden, als zur Vermeidung von Paket-Zufallskollisionen zwingend notwendig. Auch ist für eine Laufzeit-Eichmessung die Nutzung identischer Pfade auf dem Hin- und Rückweg vorgesehen.

Für eine Laufzeit-Eichmessung eignen sich somit die messbaren Laufzeit-Messwerte LZ11 und LZ12 aus Tabelle 2, wobei die Wahl des jeweils zu messenden Laufzeitmesswerts, z.B. gemäß Definition nach Tabelle 2 in Verbindung mit Figur 1, eindeutig die zu verwendenden MPLS Pfade vorgibt, und die Messeinrichtung durch entsprechende Wahl der IP Ziel-Adresse des Mess-Pakets diese Pfade festgelegt.

Im folgenden Beispiel werden für eine Laufzeit-Eichmessung zunächst die Pfade "ac" (KRUrsprung zu KRZiel1) und "ca" (KRZiel1 zu KRUrsprung) betrachtet, die dem Laufzeitmesswert LZ11 zugrunde liegen.

Die MPLS Mess-Schleife hierfür besteht aus n = 2 MPLS Pfaden, dem Pfad "ac" von KRUrsprung zu KRZiel1 und dem Pfad "ca" KRZiel1 zu KR Ursprung, wobei die Strecke "x" zwischen Messeinrichtung und KRUrsprung zur Vereinfachung weggelassen, ist, aber bei allen Messungen natürlich notwendig ist. Die Mess-Schleife, die den gesuchten Pfad enthält, besteht somit aus den Verbindungen Messeinrichtung → KRUrsprung → IR11 → KRZiel1 → IR11 → KRUrsprung → Messeinrichtung.

Diese Mess-Schleife mit den zu durchlaufenden Pfaden "ac" und "ca" wird somit entsprechend vorstehender Beschreibung, insbesondere unter Nutzung der Funktionalität für eine MPLS Schleifenmessung gemäß Offenbarung der WO 2012/110011 A2 voreingestellt.

Aus Gründen der Vereinfachung wird für die weitere Betrachtung jedoch zunächst angenommen, dass die Strecke "x" für die nachfolgende Betrachtung einer Eichmessung nicht relevant, zumindest jedoch vernachlässigbar ist, da die Messeinrichtung direkt an den Kantenrouter KRUrsprung angeschlossen oder auch in diesen integriert ist.

Nach dem vollständigen Durchlaufen dieser Mess-Schleife auf den vorgegebenen Pfaden erfasst die Messeinrichtung gemäß Fig. 1 den für die Pfade "ac" und "ca" gemäß Tabelle 2 zu bestimmenden Laufzeit-Wert, der sich aus den Laufzeiten für die Strecken "a", "c", "c" und "a" zusammensetzt und gemäß Tabelle 2 definiert werden kann als:

$$\text{LZa} + \text{LZc} + \text{LZc} + \text{LZa} \qquad\qquad = \quad \text{LZ11}.$$

Infolge dieser Eichmessung, bei der zweckmäßig keine Pakete in einem Puffer eines Routers für länger zwischengespeichert werden, als zur Vermeidung von Paket-Zufallskollisionen notwendig, setzt sich dieser Laufzeitwert LZ11 folglich auch aus der Eich-Laufzeit (LZE) für den Pfad "ac" und der Eich-Laufzeit für den selben, aber in entgegengesetzter Richtung genutzten Pfad ca zusammen, so dass gilt:

$$\text{LZE}_{ac} = \text{LZE}_{ca} = 0{,}5 \ * \ \text{LZ11}.$$

Soll für die Schleife (1) aus Tabelle 1 alternativ eine Mess-Schleife z.B. für die zu durchlaufenden Pfaden "be" und "eb" durchlaufen werden, ergibt sich nach entsprechender Voreinstellung und dem vollständigen Durchlaufen der Mess-Schleife auf den vorgegebenen Pfaden für die Pfade "be" und "eb" in entsprechender Weise ein Wert für die Eich-Laufzeit, der sich aus den Laufzeiten "LZ" für die Strecken "b", "e", "e" und "b" zusammen setzt und gemäß Tabelle 2 definiert werden kann als:

$$\text{LZb} + \text{LZe} + \text{LZe} + \text{LZb} \qquad\qquad = \quad \text{LZ12},$$

so dass gilt:

$$\text{LZE}_{be} = \text{LZE}_{eb} = 0{,}5 \ * \ \text{LZ12}.$$

Weitere Eichmessungen der dargestellten Art sind zum Beispiel auf Basis der Laufzeitmessungen LZ21 und LZ22 von Tabelle 2 möglich.

Sollte zusätzlich noch eine Laufzeit für die Strecke "x", oder gemäß Figur 2 für die Strecken "x1" und "x2" zu berücksichtigen sein, wird zweckmäßig noch die Mess-Schleife Messeinrichtung → KRUrsprung → Messeinrichtung für das Durchlaufen eines Messpakets entsprechend voreingestellt.

Ein hierbei erfasster Laufzeitwert setzt sich somit z.B. aus den Laufzeiten "LZ" für die Strecken "x" und "x" zusammen und kann definiert werden als:

$$\text{LZx} + \text{LZx} \qquad\qquad = \quad \text{LZ0},$$

so dass z.B. gilt:

$\text{LZE}_{x} = \text{LZE}_{x} = 0{,}5 \ * \ \text{LZ0}$ und in Folge:

$\text{LZE}_{ac} = \text{LZE}_{ca} = 0{,}5 \ * \ (\text{LZ11-LZ0})$, bzw. $\text{LZE}_{be} = \text{LZE}_{eb} = 0{,}5 \ * \ (\text{LZ12-LZ0})$.

Weitere Messungen aus verschiedenen Schleifen-Kombinationen können für Eichmessungen herangezogen werden. Wenn die Laufzeiten entlang der Schleifenpfade gemäß Tabelle 2 unter den erwähnten Last-Bedingungen für Eichmessungen erfasst werden, lassen sich damit, wie in der nachfolgenden Tabelle 3 mit funktionalen Abhängigkeiten aufgezeigt, die Eich-Laufzeiten $LZE_a$ - $LZE_f$ für alle einzelnen Übertragungsabschnitte a - f des Netzes basierend auf einem Messaufbau gemäß Fig. 1 durch weitere Berechnungen ermitteln.

Tabelle 3: beispielhafte funktionale Abhängigkeiten von Ein-Wege Laufzeiten, die mit Hilfe der in Tabelle 2 aufgezeigten messbaren Laufzeiten durch weitere Berechnung ermittelt werden können.

---

**Aus den Schleifen-Laufzeiten berechenbare Ein-Wege Laufzeiten:**

$$LZ3 = LZc + LZd = LZ91 - \frac{LZ11 + LZ21}{2} \quad (LZ\ KR_{Ziel1}\ zu\ KR_{Ziel2})$$

$$LZ4 = LZe + LZf = LZ82 - \frac{LZ12 + LZ22}{2} \quad (LZ\ KR_{Ziel1}\ zu\ KR_{Ziel2})$$

$$LZc = \frac{LZ91}{2} - LZ21 \qquad\qquad LZc = \frac{LZ71 - LZ6}{2}$$

$$LZd = \frac{LZ91}{2} - LZ11 \qquad\qquad LZd = \frac{LZ101 - LZ5}{2}$$

$$LZf = \frac{LZ82}{2} - LZ12 \qquad\qquad LZf = \frac{LZ72 - LZ5}{2}$$

$$LZe = \frac{LZ82}{2} - LZ22 \qquad\qquad LZe = \frac{LZ102 - LZ6}{2}$$

$$LZa = \frac{LZ11 + LZ21 - LZ91}{2} \qquad\qquad LZa = \frac{LZ6 - LZ81 + LZ5}{2}$$

$$LZb = \frac{LZ12 + LZ22 - LZ82}{2} \qquad\qquad LZb = \frac{LZ6 - LZ92 + LZ5}{2}$$

---

Die in den Tabellen 2 und 3 ausgewählten Schleifen und deren Pfade sowie die Berechnungen sind beispielhaft. Mit anderen Schleifen und Pfaden lassen sich auf ähnliche Weise dieselben Ergebnisse berechnen.

So können in entsprechend angepasster Weise z.B. die Eich-Laufzeiten $LZE_a$ - $LZE_h$ für alle einzelnen Übertragungsabschnitte a - h des Netzes basierend auf einem Messaufbau nach Fig. 2 gemäß der Erfindung ermittelt werden.

Das erfindungsgemäße Steuersystem ist folglich gemäß bevorzugter Ausführungsform zusammen mit der Messeinrichtung zur Durchführung dieser Weiterbildungen des erfindungsgemäßen Verfahrens in der Lage,

- einen jeweils ermittelten Ein-Wege-Performanz Eichparameter einer Route der Summe von Ein-Wege-Performanz Eichparameter von Übertragungsabschnitten, aus welchen sich diese Route zusammensetzt, gleich zu setzen,
- zur Ermittlung eines Ein-Wege-Performanz Eichparameters oder eines Ein-Wege-Performanz Parameters eines bestimmten Übertragungsabschnittes innerhalb einer Schleife bei einer Anzahl von n Übertragungsabschnitten innerhalb der Schleife, die zu passierenden Routen derart festzulegen, dass der bestimmte Übertragungsabschnitt innerhalb der Schleife wenigstens zweimal innerhalb verschiedener Routen auf dem Hin- und Rückweg passiert wird, und in Bezug auf alle anderen Übertragungsabschnitte innerhalb dieser Schleife bereits auf zu dem zu ermittelnden Ein-Wege-Performanz Parameter entsprechende Ein-Wege-Performanz Parameter-Eichwerte für Routen zurückgegriffen werden kann, die diese anderen Übertragungsabschnitte enthalten,
- nach vollständigem Durchlaufen dieser Schleife einen zu dem zu ermittelnden Ein-Wege-Performanz Parameter gehörender Performanz-Wert zu messen und diesen der durchlaufenen Schleife insgesamt zu zuordnen, und
- den zu ermittelnden Ein-Wege-Performanz Eichparameter oder Ein-Wege-Performanz Parameter des bestimmten Übertragungsabschnittes in funktionaler Abhängigkeit von dem gemessenen Performanz-Wert der gesamten durchlaufenen Schleife und den Ein-Wege-Performanz Eichparametern für die Routen, die diese anderen Übertragungsabschnitte enthalten, zu berechnen.

Basierend auf dem vorbeschriebenen erfindungsgemäßen Verfahren einer Eichmessung kann folglich die physikalisch minimale Laufzeit von MPLS Pfaden zwischen zwei bestimmten Routern, z.B. von KRUrsprung zu KRZiel, aus Messwerten direkt oder in Folge weiterer Berechnung ermittelt werden. Mit einer Eichmessung kann z.B. auch, wie gezeigt und der Tabelle 3 zu entnehmen, die physikalisch minimale Laufzeit jedes Übertragungsabschnitts KR zu IR aus Messwerten berechnet werden.

Insbesondere basierend auf der in der WO 2012/110011 A2 beschriebenen Methode zum Senden von Messpaketen entlang beliebiger MPLS Schleifen zwischen den Kantenroutern eines MPLS Netzes kann somit mit Hilfe der bereits dargestellten Eichmessungen in vorteilhafter Weise auch die Performanz eines beliebigen durchlaufbaren MPLS Pfades aus Messwerten ermittelt werden. So sind in Figur 1 sechs MPLS Schleifen, die ihrerseits aus verschiedenen Pfaden oder Übertragungsabschnitts-Kombinationen bestehen können, dargestellt. Diese MPLS Schleifen sind:

- KRUrsprung - KRZiel1,
- KRUrsprung - KRZiel2,
- KRZiel1 - KRZiel2,
- KRZiel2 - KRZiel1,
- KRZiel1 - KRUrsprung,
- KRZiel2 - KRUrsprung,

und beispielhaft für die MPLS Schleife KRUrsprung - KRZiel1 basierend auf Figur 1 folgende Pfad-Realisierungen:

- KRUrsprung - Verbindung a mit Laufzeit LZa - IR11 - Verbindung c mit Laufzeit LZc - KRZiel1;

- KRUrsprung - Verbindung b mit Laufzeit LZb - IR22 - Verbindung e mit Laufzeit LZe - KRZiel1.

So lassen sich folglich für jede mögliche MPLS Schleife aus gemäß Figur 1 zwei Pfad-Realisierungen finden. Für eine beispielsweise gewählte MPLS Mess-Schleife Messapparat - KRUrsprung - KRZiel1- KRUrsprung - Messapparat gibt es deshalb vier Pfad-Realisierungen, wobei die nachfolgenden Angaben wiederum der Einfachheit halber ohne Erwähnung der Messeinrichtung sind, mit folgenden messbaren Laufzeiten:

- LZ11, gemäß Tabelle 2 mit den Pfaden KRUrsprung - Übertragungsabschnitt a mit LZa - IR11 - Übertragungsabschnitt c mit LZc - KRZiel1 und KRZiel1-Übertragungsabschnitt c mit LZc - IR11-Übertragungsabschnitt a mit LZa - KRUrsprung. Die MPLS Pfade sind hier somit ac und ca mit der sich ergebenden Schleifen-Laufzeit $LZ11 = LZ_{ac} + LZ_{ca}$.

- LZ12, gemäß Tabelle 2 mit den Pfaden KRUrsprung - Übertragungsabschnitt b mit LZb - IR22 - Übertragungsabschnitt e mit LZe - KRZiel1 und KRZiel1-Übertragungsabschnitt e mit LZe - IR22-Übertragungsabschnitt b mit LZb - KRUrsprung. Die Pfade sind hier somit be und eb mit der sich ergebenden Schleifen-Laufzeit $LZ12 = LZ_{be} + LZ_{eb}$.

- LZ5, gemäß Tabelle 2 mit den Pfaden KRUrsprung - Übertragungsabschnitt a mit LZa - IR11 - Übertragungsabschnitt c mit LZc - KRZiel1 und KRZiel1-Übertragungsabschnitt e mit LZe - IR22-Übertragungsabschnitt b mit LZb - KRUrsprung. Die Pfade sind hier somit ac und eb mit der sich ergebenden Schleifen-Laufzeit $LZ5 = LZ_{ac} + LZ_{eb}$.

- LZn, gemäß nachfolgender Tabelle 4 mit den Pfaden KRUrsprung - Übertragungsabschnitt b mit LZb - IR22 - Übertragungsabschnitt e mit LZe - KRZiel1 und KRZiel1-Übertragungsabschnitt c mit LZc - IR11-Übertragungsabschnitt a mit LZa - KRUrsprung. Die Pfade sind hier somit be und ca mit der sich ergebenden Schleifen-Laufzeit $LZn = LZ_{be} + LZ_{ca}$.

Tabelle 4: Weitere ermittelbare Laufzeiten entlang von MPLS-Schleifen auf deren Basis Ein-Wege Performanz-Ermittlungen durchgeführt werden können.

| | |
|---|---|
| LZn1 = LZb + LZf + LZd + LZa | für Schleife (2) |
| LZn = LZb + LZe + LZc + LZa | für Schleife (1) |

Nachfolgend wird an dem Beispiel dieser Schleifen eine MPLS Ein-Wege-Performanzermittlung nach der Erfindung dargestellt. Das Verfahren ist für andere Schleifen mit demselben Prinzip genauso ausführbar. Allgemeine Voraussetzung ist, dass für einen Pfad dieser Schleife eine Eichmessung vorliegt.

Hier sei angenommen das sei der Pfad ac und damit die Eich-Laufzeiten $LZE_a$ und $LZE_c$ oder die Laufzeit $LZE_{ac}$, wobei die Summe der Laufzeiten der einzelnen Übertragungsabschnitte bei der Eichmessung die Laufzeit des Pfades ergibt. Für alle anderen Pfade dieser Schleifen, wie nachfolgend aufgezeigt, sind hierauf basierend auch Ermittlungen von Eichwerten möglich.

Um die Ein-Wege Performanz eines anderen Pfads als ac zu bestimmen, darf zum Zeitpunkt der Messung entlang dieses Pfads, dessen Eich-Laufzeit bekannt ist, keine Überlast vorliegen. Die Performanz des anderen Pfads ist nicht bekannt und soll bestimmt, d.h. gemessen oder basierend auf Messungen berechnet werden.

Entsprechend oben aufgezeigter Zusammenhänge kommen für eine Messung somit zunächst alle Schleifen in Frage, in denen $LZE_{ac}$ oder $LZE_{ca}$ auftauchen, wobei $LZE_{ca}$ gleich $LZE_{ac}$ ist, solange die Bedingung einer Eichmessung erfüllt ist. Das sind die Schleifen mit den Laufzeit-Messwerten LZ11, LZ5 gemäß Tabelle 2 oder LZn gemäß Tabelle 4. Als Beispiel wird nachfolgend die Bestimmung von Messwert LZ5 gewählt.

Wenn keine Überlast auf dem Pfad mit bekannter Eichlaufzeit, d.h. im angenommenen Fall auf dem Pfad "ac" mit $LZ_{ac} = LZE_{ac}$, vorliegt, lässt sich das Messergebnis LZ5 umschreiben in $LZ5 = LZE_{ac} + LZ_{eb}$.

Es ergibt sich somit $LZ_{eb} = LZ5 - LZE_{ac}$. Weil LZ5 gemessen werden kann und $LZE_{ac}$ bekannt ist, können die Ein-Wege Laufzeit $LZ_{eb}$ und darauf basierend weitere Performanz-Metriken wie Jitter, Paketverlust usw. berechnet werden. Wie einleitend dargestellt, ermöglicht die Erfindung dies mit einer einzigen Messeinrichtung und ohne erforderliche GPS Synchronisation mehrerer Zeitstempel.

Eine Möglichkeit ohne Überlast zu messen ist, wie bereits aufgezeigt, die Verwendung einer QoS Verkehrsklasse E, z.B. mittels Expedited Forwarding (vgl. z.B. "An Expedited Forwarding PHB (Per-Hop Behavior)", RFC 3246, März 2002 von B. Davie, A. Charny et Al.) oder Assured Forwarding (vgl. z.B. "Assured Forwarding PHB Group", RFC2597, Juni 1999 von J. Heinanen, F.Baker et Al.) für die MPLS Traffic Class des Messpakets, während entlang dem geeichten MPLS Pfad gesendet wird, also gemäß vorliegender Annahmen z.B. entlang des Pfades ac.

Das MPLS Label des Messpakets für den Pfad, dessen Ein-Wege Performanz ermittelt werden soll, kann hingegen die beliebig wählbare QoS Klasse M haben, wobei diese auch gleich der Eichklasse E sein kann, was bei bislang unbekannten Pfaden sinnvoll ist, sie kann jedoch z.B. auch Best Effort oder eine andere QoS Klasse sein.

In der nachfolgenden Tabelle 5 werden alle Pfade der MPLS Schleife (1) gemäß Tabelle 1 angegeben, für die somit erfindungsgemäß mit der vorliegenden Eichmessung $LZE_{ac}$ die Performanz eines anderen Pfads bestimmt werden kann.

Tabelle 5: Mit Messwerten und bekannten Eich-Laufzeiten ermittelbare Performanz-Werte von MPLS Pfaden mit bislang unbekannter Performanz

| Gemessene Laufzeit | Pfad der Schleife mit bekannter Eich-Laufzeit, der während der aktuellen Messung ohne Überlast ist | Pfad dessen Ein-Wege Performanz berechnet werden kann |
|:---:|:---:|:---:|
| LZ11 | $LZE_{ac}$ | $LZ_{ca}$ |
| LZ11 | $LZE_{ca}$ | $LZ_{ac}$ |
| LZ5 | $LZE_{ac}$ | $LZ_{eb}$ |
| LZn | $LZE_{ca}$ | $LZ_{be}$ |

Zwar wurde vorstehend vornehmlich im Wesentlichen die Laufzeitmessung entlang eines unbekannten Pfades beschrieben. Die Berechnung des Paketverlusts und die des Jitters, sowie anderer aktiv messbarer Performanz-Messwerte auf Basis von Paketen, mit denen Laufzeiten gemessen werden, ist basierend auf dem Wissen nach dem Stand der Technik und den vorangestellten funktionalen Abhängigkeiten für einen Fachmann offensichtlich und wird hier in Folge nicht näher dargestellt.

Um die Ein-Wege Performanz eines MPLS Pfads zu bestimmen, der nicht an dem (Kanten-)Router beginnt oder endet, an den die erfindungsgemäß ausgebildete Messeinrichtung angeschaltet ist, muss etwas aufwendiger vorgegangen werden. Hier ist es notwendig, sowohl einen Eichmesswert eines Pfads zu dem (Kanten-)Router zu kennen, an dem der MPLS Pfad beginnt, dessen bislang unbekannte Performanz bestimmt werden soll, als auch einen Eichmesswert zu dem (Kanten-)Router, an dem dieser Pfad mit bislang unbekannter Performanz endet.

Ein erfindungsgemäßes Grundprinzip bleibt jedoch auch hierbei bestehen. In einer Schleife aus i = 1..n Pfaden müssen Eichmesswerte zu i = n-1 Pfaden vorliegen. Mit den bekannten Eichmesswerten und einer Mess-Schleife, in der alle n Pfade auftreten, ist aus dem Performanzmesswert der Mess-Schleife die Performanz des Pfades i = n ermittelbar. Die in dem Performanzmesswert enthaltene Performanz entlang der bekannten Pfade i = 1..n-1 ist hierzu, wie beschrieben, zweckmäßig bekannt, z.B. durch Wahl überlastfreier QoS Klassen für diese Pfade. Wurde vorstehend das Verfahren und das System gemäß der Erfindung für eine Schleifen mit n = 2 Pfaden beschrieben, folgt nachfolgend ein Beispiel für Schleifen mit n = 3 Pfaden.

Beispielsweise ist gemäß Messaufbau des erfindungsgemäßen Systems nach Fig. 1 die Performanz der MPLS Schleife KRZiel1 zu KRZiel2 unbekannt. Für die dazu gehörende MPLS Mess-Schleife wird z.B. die MPLS Schleife (3) aus Tabelle 1 genutzt. Unbekannt ist auch die Performanz des Pfads KRZiel2 zu KRZiel1. Für die dazu gehörende MPLS Mess-Schleife wird z.B. die MPLS Schleife (4) aus Tabelle 1 genutzt. Die Pfade zwischen den beiden Ziel-Kantenrouter können über die Übertragungsabschnitte c und d oder über e und f der Figur. 1 realisiert werden. Da, wie bereits vorstehend erwähnt, die Richtung entlang welcher die Pfade durchlaufen werden, für die Performanz in der Regel eine Rolle spielt, ergeben sich folglich in diesem Beispiel 4 MPLS Pfade, deren Ein-Wege Performanz mit der beschriebenen Methode gemessen werden kann. Diese 4 MPLS Pfade sind: "cd", "dc", "ef" und "fe". Hier werde als Beispiel für eine MPLS Mess-Schleife zunächst die MPLS-Schleife (3) aus Tabelle 1 gewählt. Für einen Pfad auf der Schleife KRZiel1 zu KRZiel2, dessen Ein-Wege Performanz bestimmt werden, wird im Folgenden beispielhaft zunächst der Pfad "ef" gewählt, also gemäß Figur 1 der Pfad KRZiel1 → Ihr22 → KRZiel2.

Eine geeignete MPLS Mess-Schleife besteht somit z.B. aus n = 3 MPLS Pfaden, KRUrsprung zu KRZiel1, KRZiel1 zu KRZiel2 und KRZiel2 zu KR Ursprung, wobei die Schleife zwischen Messeinrichtung und KRUrsprung zur Vereinfachung wieder weggelassen wurde, aber bei allen Messungen basierend auf Figur 1 natürlich durchlaufen werden muss. Eine Mess-Schleife, die den gesuchten Pfad enthält, besteht somit aus den Übertragungsabschnitten Messeinrichtung → KRUrsprung → IR22 → KRZiel1 → IR22 → KRZiel2 → IR22 → KRUrsprung → Messeinrichtung.

Diese Mess-Schleife ergibt folglich den Laufzeit-Messwert LZ82 aus Tabelle 2. Es werden ferner zunächst Eichmesswerte benötigt für die Abschnitte Messeinrichtung → KRUrsprung → IR22 → KRZiel1 und Messeinrichtung → KRUrsprung → IR22 → KRZiel2. Wie die hierfür notwendigen Eichmesswerte LZ12 und LZ22 gemäß Tabelle 2 gemäß der der Erfindung erhaltbar sind, wurde bereits aufgezeigt. Die gewünschte Performanz entlang des Pfades "ef", d.h. KRZiel1 → IR22 → KRZiel2 kann dann über den Laufzeitwert LZ4 aus Tabelle 3 ermittelt werden. Mit den weiteren Messungen für die in Tabelle 2 betrachteten Schleifen kann, wie in Tabelle 3 dargestellt, etwa auch die Performanz des Pfads KRZiel1 → IR11 → KRZiel2, d.h. des Pfades "cd" ermittelt werden, dessen Laufzeitwert gemäß Tabelle3 LZ3 ist. Dazu benötigt werden die Laufzeiten der Schleifen, die mit LZ91, LZ11 und LZ21 in Tabelle 2 erfasst werden. Wie in Tabelle 3 dargestellt, ergibt sich die daraus gesuchte Ein-Wege Laufzeit LZ3. Für die einzelnen Übertragungsabschnitte c, d, e und f der Figur. 1 können dann anschließend basierend auf Tabelle 3 die entsprechenden Laufzeit LZc, LZd, LZe und LZf ermittelt werden. Die Tabellen können hierbei in der Messeinrichtung hinterlegt sein oder an anderer Stelle im System, auf welche die Messeinrichtung zur entsprechenden Ermittlung der Performanzwerte zugreifen kann. Insgesamt ist auch hier erfindungsgemäß zweckmäßig vorzusehen, dass Eichbedingungen auf den Pfaden herrschen, zu denen Eichmesswerte vorliegen.

Die Erfindung ermöglicht gemäß vorstehender Ausführung auch die Laufzeitmessung entlang eines unbekannten Pfades. Das Vorgehen bei der Ermittlung des Paketverlusts und/oder eines Jitters, sowie auch anderer aktiv messbarer Performanz-Messwerte auf Basis von Mess-Paketen, mit denen Laufzeiten gemessen werden, ist anhand vorstehender Beschreibung für einen Fachmann offensichtlich und entspricht im Weiteren im Wesentlichen dem Stand der Technik, so dass dieses hier nicht näher dargestellt.

Zusammenfassend ist mit der Erfindung somit ein Paket Steuersystem zum Übertragen von Paketen in paketvermittelnden Kommunikationsteilnetzen, insbesondere von MPLS Paketen in einem MPLS Kommunikationsteilnetz zur Verfügung gestellt, bei welchem das Paket auf einer Schleife von einem Absender ausgehend zu einem Ziel und zurück zum Absender übertragen wird, und hierbei eine Anzahl von (Kanten-)Routern passiert, wobei ein Router ein innerer Router sein kann oder ein Kantenrouter, der einen Übergang zwischen dem Kommunikationsteilnetz und einem Anschlussnetz oder einen Abschluss des Kommunikationsteilnetzes darstellt, und wobei das Steuersystem zum Ermitteln von Ein-Wege-Performanz Parametern eines Pakets eine Messeinrichtung besitzt, die als Absender an wenigstens einen (Kanten-)Router direkt angeschlossen ist oder Teil dieses einen (Kanten-)Routers ist, und mit welcher das Steuersystem in der Lage ist, nach vollständigem Durchlaufen der Schleife einen zu dem zu ermittelnden Ein-Wege-Performanz Parameter gehörenden Messwert zu messen und dieser durchlaufenen Schleife insgesamt zu zuordnen. Das Steuersystem ist mit der Messeinrichtung ferner in die Lage versetzt, alle auf der Schleife zwischen jeweils zwei bestimmten (Kanten-)Routern zu passierenden Routen innerhalb der Schleife für ein Paket bereits vor dessen Übertragung derart fest zu legen, dass bei einer Anzahl von n Routen innerhalb der Schleife, in Bezug auf n-1 Routen innerhalb der Schleife bereits auf zu dem zu ermittelnden Ein-Wege-Performanz Parameter entsprechende Ein-Wege-Performanz Parameter-Eichwerte zurückgegriffen werden kann, und den zu ermittelnden Ein-Wege-Performanz Parameter in Bezug auf die verbleibende Route in funktionaler Abhängigkeit von dem gemessenen Performanz-Messwert der gesamten durchlaufenen Schleife und den Ein-Wege-Performanz Parameter-Eichwerten der n-1 Routen zu berechnen.

Von Vorteil ist, wenn ein jeweils ermittelter Ein-Wege-Performanz Parameter-Eichwerteiner Route der Summe von Ein-Wege-Performanz Parameter-Eichwerten von Übertragungsabschnitten, aus welchen sich diese Route zusammensetzt, gleichgesetzt wird, und zur Ermittlung eines Ein-Wege-Performanz Parameter-Eichwertes oder eines Ein-Wege-Performanz Parameters eines bestimmten Übertragungsabschnittes innerhalb einer Schleife bei einer Anzahl von n Übertragungsabschnitten innerhalb der Schleife, dieser bestimmte Übertragungsabschnitt innerhalb einer Schleife wenigstens zweimal innerhalb verschiedener Routen auf dem Hin- und Rückweg passiert wird, so dass nach vollständigen Durchlaufen dieser Schleife ein zu dem zu ermittelnden Ein-Wege-Performanz Parameter gehörender Performanz-Wert gemessen wird, der dieser durchlaufenen Schleife insgesamt zugeordnet wird, und wobei in Bezug auf alle anderen Übertragungsabschnitte innerhalb dieser Schleife bereits auf zu dem zu ermittelnden Ein-Wege-Performanz Parameter entsprechende Ein-Wege-Performanz Parameter-Eichwerte für Routen zurückgegriffen werden kann, die diese anderen Übertragungsabschnitte enthalten, wobei der zu ermittelnde Ein-Wege-Performanz Parameter-Eichwert oder Ein-Wege-Performanz Parameter des bestimmten Übertragungsabschnittes in funktionaler Abhängigkeit von dem gemessenen Performanz-Wert der gesamten durchlaufenen Schleife und den Ein-Wege-Performanz Parameter-Eichwerten für die Routen, die diese anderen Übertragungsabschnitte enthalten, berechnet wird.

Gemäß vorhergehender Betrachtung ist das Steuersystem zusammen mit der Messeinrichtung ferner in die Lage gesetzt, dass zur Ermittlung von Ein-Wege-Performanz Parameter-Eichwerten, die Pakete auf den entsprechenden Routen Überlast-frei übertragen werden und/oder zur Ermittlung von Ein-Wege-Performanz Parametern, die Pakete auf den Routen, in Bezug auf welche bereits auf Ein-Wege-Performanz Parameter-Eichwerte zurückgegriffen werden kann, Überlast-frei übertragen werden.

Mit dieser Betrachtung ist das Vorgehen des erfindungsgemäßes Verfahrens und Systems beim Ermitteln von Ein-Wege Performanz Parametern in einem paketvermittelten, verbindungslosen Kommunikationsteilnetz, insbesondere in einem MPLS Kommunikationsteilnetz, somit grundlegend dargestellt, so dass diese ausreicht, hierauf basierend auch komplexere Schleifen gewählt werden können. Die grundlegende Vorgehensweise und Ausbildung der Messeinrichtung sowie des Systems insgesamt, zur Berechnung der Performanz unbekannter Pfade bleibt gleich.

## Patentansprüche

1. Verfahren zum Ermitteln von Ein-Wege-Performanz-Parametern beim Übertragen eines Pakets in paketvermittelnden Kommunikationsteilnetzen,

   - wobei das Paket auf einer Schleife von einem Absender ausgehend zu einem Ziel und zurück zum Absender übertragen wird, und hierbei eine Anzahl von Routern (KRUrsprung, KRZiel1, KRZiel2, IR11, IR22) passiert, wobei ein Router ein innerer Router sein kann oder ein Kantenrouter, der einen Übergang zwischen dem Kommunikationsteilnetz und einem Anschlussnetz oder einen Abschluss des Kommunikationsteilnetzes darstellt, und nach vollständigem Durchlaufen der Schleife ein zu dem zu ermittelnden Ein-Wege-Performanz-Parameter gehörender Messwert gemessen wird, der dieser durchlaufenen Schleife insgesamt zugeordnet wird,

   wobei alle auf der Schleife zwischen jeweils zwei bestimmten Routern zu passierenden Routen innerhalb der Schleife für ein Paket bereits vor dessen Übertragung derart festgelegt werden, dass bei einer Anzahl von n Routen innerhalb der Schleife, in Bezug auf n-1 Routen innerhalb der Schleife bereits auf zu dem zu ermittelnden Ein-Wege-Performanz-Parameter entsprechende Ein-Wege-Performanz-Eichwerte zurückgegriffen werden kann, und der zu ermittelnde Ein-Wege-Performanz-Parameter in Bezug auf die verbleibende Route in funktionaler Abhängigkeit von dem gemessenen Performanz-Messwert der gesamten durchlaufenen Schleife und den Ein-Wege-Performanz-Eichwerten der n-1 Routen berechnet wird.

2. Verfahren zum Ermitteln von Ein-Wege-Performanz-Parameter eines Pakets in paketvermittelnden Kommunikationsteilnetzen nach Anspruch 1,

   - wobei zur Ermittlung von Ein-Wege-Performanz-Eichwerten das Paket auf wenigstens einer Schleife von einem Absender ausgehend zu einem Ziel und zurück zum Absender übertragen wird, und hierbei eine Anzahl von Routern (KRUrsprung, KRZiel1, KRZiel2, IR11, IR22) passiert, wobei ein Router ein innerer Router sein kann oder ein Kantenrouter, der einen Übergang zwischen dem Kommunikationsteilnetz und einem Anschlussnetz oder einen Abschluss des Kommunikationsteilnetzes darstellt,
   wobei alle auf einer Schleife zwischen jeweils zwei bestimmten Routern zu passierenden Routen innerhalb der Schleife für ein Paket bereits vor dessen Übertragung derart festgelegt werden,
   dass die Routen von dem Absender ausgehend zu dem Ziel auch als die Routen vom Ziel zurück zum Absender genutzt werden, und
   dass bei der Ermittlung von Ein-Wege-Performanz-Parameter-Eichwerten zu einer Anzahl von n Routen, das Paket nacheinander auf n-1 Schleifen übertragen wird,
   - wobei eine erste Schleife zur Übertragung des Pakets definiert wird, welche lediglich die erste Route aus der Anzahl der n Routen sowohl auf dem Hinweg und dem Rückweg beinhaltet, oder welche lediglich die letzte Route aus der Anzahl der n Routen auf dem Hinweg und dem Rückweg beinhaltet, wobei nach Durchlaufen dieser Schleife ein zu dem zu ermittelnden Ein-Wege-Performanz-Parameter gehörender Performanz-Messwert gemessen wird, der dieser durchlaufenen Schleife insgesamt zugeordnet wird und wobei der halbe Performanz-Messwert als Ein-Wege-Performanz-Parameter-Eichwert der passierten Route sowohl für Hinweg und dem Rückweg zugeordnet wird, und
   - wobei in jeder weiteren Schleife, welche bis zu der Anzahl von n-1 Schleifen definiert wird, jeweils eine sich an die Routen aus der vorhergehenden Schleife anschließende weitere Route aus der Anzahl der n Routen sowohl auf dem Hinweg und dem Rückweg beinhaltet, wobei nach Durchlaufen jeder dieser weiteren Schleife ein zu dem zu ermittelnden Ein-Wege-Performanz-Parameter gehörender Performanz-Messwert gemessen wird, der jeweils der durchlaufenen Schleife insgesamt zugeordnet wird und wobei der sich an die Routen aus der vorhergehenden Schleife anschließenden weiteren Route sowohl für Hinweg und dem Rückweg jeweils ein Ein-Wege-Performanz-Parameter-Eichwert in funktionaler Abhängigkeit dieses gemessenen Performanz-Messwertes und den Ein-Wege-Performanz-Parameter-Eichwerten, welche den Routen aus der vorhergehenden Schleife zugeordnet wurden, berechnet und zugeordnet wird.

3.  Verfahren zum Ermitteln von Ein-Wege-Performanz-Parameter eines Pakets in paketvermittelnden Kommunikationsteilnetzen

    - wobei zur Ermittlung von Ein-Wege-Performanz-Eichwerten das Paket auf wenigstens einer Schleife von einem Absender ausgehend zu einem Ziel und zurück zum Absender übertragen wird, und hierbei eine Anzahl von Routern (KRUrsprung, KRZiel1, KRZiel2, IR11, IR22) passiert, wobei ein Router ein innerer Router sein kann oder ein Kantenrouter, der einen Übergang zwischen dem Kommunikationsteilnetz und einem Anschlussnetz oder einen Abschluss des Kommunikationsteilnetzes darstellt,
    wobei alle auf einer Schleife zwischen jeweils zwei bestimmten Routern zu passierenden Routen innerhalb der Schleife für ein Paket bereits vor dessen Übertragung derart festgelegt werden,
    dass die Routen von dem Absender ausgehend zu dem Ziel auch als die Routen vom Ziel zurück zum Absender genutzt werden, und
    dass bei der Ermittlung von Ein-Wege-Performanz-Parameter-Eichwerten zu einer Anzahl von n Routen, das Paket nacheinander auf n-1 Schleifen übertragen wird,
    - wobei eine erste Schleife zur Übertragung des Pakets definiert wird, welche lediglich die erste Route aus der Anzahl der n Routen sowohl auf dem Hinweg und dem Rückweg beinhaltet, oder welche lediglich die letzte Route aus der Anzahl der n Routen auf dem Hinweg und dem Rückweg beinhaltet, wobei nach Durchlaufen dieser Schleife ein zu dem zu ermittelnden Ein-Wege-Performanz-Parameter gehörender Performanz-Messwert gemessen wird, der dieser durchlaufenen Schleife insgesamt zugeordnet wird und wobei der halbe Performanz-Messwert als Ein-Wege-Performanz-Parameter-Eichwert der passierten Route sowohl für Hinweg und dem Rückweg zugeordnet wird, und
    - wobei in jeder weiteren Schleife, welche bis zu der Anzahl von n-1 Schleifen definiert wird, jeweils eine sich an die Routen aus der vorhergehenden Schleife anschließende weitere Route aus der Anzahl der n Routen sowohl auf dem Hinweg und dem Rückweg beinhaltet, wobei nach Durchlaufen jeder dieser weiteren Schleife ein zu dem zu ermittelnden Ein-Wege-Performanz-Parameter gehörender Performanz-Messwert gemessen wird, der jeweils der durchlaufenen Schleife insgesamt zugeordnet wird und wobei der sich an die Routen aus der vorhergehenden Schleife anschließenden weiteren Route sowohl für Hinweg und dem Rückweg jeweils ein Ein-Wege-Performanz-Parameter-Eichwert in funktionaler Abhängigkeit dieses gemessenen Performanz-Messwertes und den Ein-Wege-Performanz-Parameter-Eichwerten, welche den Routen aus der vorhergehenden Schleife zugeordnet wurden, berechnet und zugeordnet wird.

4.  Verfahren nach Anspruch 2 oder 3, wobei jeweils als Ein-Wege-Performanz-Parameter-Eichwert ein Ein-Wege-Performanz-Parameter-Eichwert berechnet und zugeordnet wird, der der Hälfte aus der Differenz dieses gemessenen Performanz-Wertes und den Ein-Wege-Performanz-Parameter-Eichwerten, welche den Routen aus der vorhergehenden Schleife zugeordnet wurden, entspricht.

5.  Verfahren nach einem der Ansprüche 1 bis 4, welches zum Ermitteln von Ein-Wege-Performanz-Parameter eines MPLS Paketes in einem MPLS Kommunikationsteilnetz eingesetzt wird.

6.  Verfahren nach einem der Ansprüche 1 bis 5,

    - wobei ein jeweils ermittelter Ein-Wege-Performanz-Parameter-Eichwert einer Route der Summe von Ein-Wege-Performanz-Parameter-Eichwerten von Übertragungsabschnitten, aus welchen sich diese Route zusammensetzt, gleichgesetzt wird, und
    - wobei zur Ermittlung eines Ein-Wege-Performanz-Parameter-Eichwertes oder eines Ein-Wege-Performanz-Parameters eines bestimmten Übertragungsabschnittes innerhalb einer Schleife bei einer Anzahl von n Übertragungsabschnitten innerhalb der Schleife, dieser bestimmte Übertragungsabschnitt innerhalb einer Schleife wenigstens zweimal innerhalb verschiedener Routen auf dem Hin- und Rückweg passiert wird, so dass nach vollständigen Durchlaufen dieser Schleife ein zu dem zu ermittelnden Ein-Wege-Performanz-Parameter gehörender Performanz-Wert gemessen wird, der dieser durchlaufenen Schleife insgesamt zugeordnet wird, und wobei in Bezug auf alle anderen Übertragungsabschnitte innerhalb dieser Schleife bereits auf zu dem zu ermittelnden Ein-Wege-Performanz-Parameter entsprechende Ein-Wege-Performanz-Eichparameter für Routen zurückgegriffen werden kann, die diese anderen Übertragungsabschnitte enthalten,
- wobei der zu ermittelnde Ein-Wege-Performanz-Parameter-Eichwert oder Ein-Wege-Performanz-Parameter des bestimmten Übertragungsabschnittes in funktionaler Abhängigkeit von dem gemessenen Performanz-Wert der gesamten durchlaufenen Schleife und den Ein-Wege-Performanz-Parameter-Eichwerten für die Routen, die diese anderen Übertragungsabschnitte enthalten, berechnet wird.

7. Verfahren nach einem der Ansprüche 1 bis 6, wobei zur Ermittlung von Laufzeit-abhängigen Ein-Wege-Performanz-Parametern beim Versenden des Pakets auf einer Schleife, diesem Paket ein Zeitstempel zugeordnet wird, der nach Durchlaufen der Schleife ausgewertet wird.

8. Paket-Steuersystem zum Übertragen von Paketen in paketvermittelnden Kommunikationsteilnetzen,

- welches ausgebildet ist, zum Übertragen des Pakets auf einer Schleife von einem Absender ausgehend zu einem Ziel und zurück zum Absender und zwar zum Passieren des Pakets hierbei einer Anzahl von Routern (KRUrsprung, KRZiel1, KRZiel2, IR11, IR22), wobei ein Router ein innerer Router sein kann oder ein Kantenrouter, der einen Übergang zwischen dem Kommunikationsteilnetz und einem Anschlussnetz oder einen Abschluss des Kommunikationsteilnetzes darstellt,
- wobei das Steuersystem zum Ermitteln von Ein-Wege-Performanz-Parametern eines Pakets eine Messeinrichtung besitzt, die als Absender an wenigstens einen Router direkt angeschlossen ist oder Teil dieses einen Routers ist, und mit welcher das Steuersystem in der Lage ist, nach vollständigem Durchlaufen der Schleife zum Messen eines zu dem zu ermittelnden Ein-Wege-Performanz-Parameter gehörenden Messwerts und zum Zuordnen dieses Messwertes zu dieser durchlaufenen Schleife insgesamt, und
wobei das Steuersystem mit der Messeinrichtung ferner in der Lage ist, zum Festlegen aller auf der Schleife zwischen jeweils zwei bestimmten Routern zu passierenden Routen innerhalb der Schleife für ein Paket bereits vor dessen Übertragung derart, dass bei einer Anzahl von n Routen innerhalb der Schleife, in Bezug auf n-1 Routen innerhalb der Schleife bereits auf zu dem zu ermittelnden Ein-Wege-Performanz-Parameter entsprechende Ein-Wege-Performanz-Eichwerte zurückgegriffen werden kann, und zum Berechnen des zu ermittelnden Ein-Wege-Performanz-Parameter in Bezug auf die verbleibende Route in funktionaler Abhängigkeit von dem gemessenen Performanz-Messwert der gesamten durchlaufenen Schleife und den Ein-Wege-Performanz-Eichwerten der n-1 Routen.

9. Paket-Steuersystem zum Übertragen von Paketen in paketvermittelnden Kommunikationsteilnetzen, wobei das Steuersystem zum Ermitteln von Ein-Wege-Performanz-Parametern eines Pakets eine Messeinrichtung besitzt

- und zur Ermittlung von Ein-Wege-Performanz-Parameter-Eichwerten ausgebildet ist, zum Übertragen des Pakets auf wenigstens einer Schleife von einem Absender ausgehend zu einem Ziel und zurück zum Absender und zwar zum Passieren des Pakets hierbei einer Anzahl von Routern (KRUrsprung, KRZiel1, KRZiel2, IR11, IR22), wobei ein Router ein innerer Router sein kann oder ein Kantenrouter, der einen Übergang zwischen dem Kommunikationsteilnetz und einem Anschlussnetz oder einen Abschluss des Kommunikationsteilnetzes darstellt,
- wobei die Messeinrichtung als Absender an wenigstens einen Router direkt angeschlossen ist oder Teil dieses einen (Kanten-)Routers ist, und das Steuersystem mit der Messeinrichtung in der Lage ist, zum Festlegen aller auf einer Schleife zwischen jeweils zwei Routern zu passierenden Routen innerhalb der Schleife für ein Paket bereits vor dessen Übertragung derart,
dass die Routen von dem Absender ausgehend zu dem Ziel auch als die Routen vom Ziel zurück zum Absender genutzt werden, und bei der Ermittlung von Ein-Wege-Performanz-Parameter-Eichwerten zu einer Anzahl von n Routen, zum Übertragen des Pakets nacheinander auf n-1 Schleifen,
- wobei das Steuersystem mit der Messeinrichtung in der Lage ist, zum Definieren einer ersten Schleife zur Übertragung des Pakets, welche lediglich die erste Route aus der Anzahl der n Routen sowohl auf dem Hinweg und dem Rückweg beinhaltet, oder welche lediglich die letzte Route aus der Anzahl der n Routen auf dem Hinweg und dem Rückweg beinhaltet, und nach Durchlaufen dieser Schleife zum Messen eines zu dem zu ermittelnden Ein-Wege-Performanz-Parameter gehörenden Performanz-Werts und zum Zuordnen dieses Messwertes der durchlaufenen Schleife insgesamt und des halben Performanz-Werts als Ein-Wege-Performanz-Parameter-Eichwert der passierten Route sowohl für Hinweg und dem Rückweg, und
- wobei das Steuersystem mit der Messeinrichtung in der Lage ist, zum Definieren einer jeweils weiteren Schleife bis zu der Anzahl von n-1 Schleifen, welche jeweils eine sich an die Routen aus der vorhergehenden Schleife anschließende weitere Route aus der Anzahl der n Routen sowohl auf dem Hinweg und dem Rückweg beinhaltet, und nach Durchlaufen jeder dieser weiteren Schleife zum Messen eines zu dem zu ermittelnden Ein-Wege-Performanz-Parameter gehörenden Performanz-Messwerts und zum Zuordnen dieses Messwerts der jeweils durchlaufenen Schleife insgesamt und zum Berechnen und Zuordnen jeweils eines Ein-Wege-Performanz-Parameter-Eichwerts der sich an die Routen aus der vorhergehenden Schleife anschließenden weiteren Route sowohl für Hinweg und dem Rückweg, und zwar in funktionaler Abhängigkeit dieses gemessenen Performanz-Wertes und den Ein-Wege-Performanz-Parameter-Eichwerten, welche den Routen aus der vorhergehenden Schleife zugeordnet worden sind, ,.

10. Steuersystem nach Anspruch 8 und 9,
wobei die Messeinrichtung weiterhin ausgebildet ist, jeweils als Ein-Wege-Performanz-Parameter-Eichwert einen Ein-Wege-Performanz-Parameter-Eichwert zu berechnen und zuzuordnen, der der Hälfte aus der Differenz dieses gemessenen Performanz-Wertes und den Ein-Wege-Performanz-Parameter-Eichwerten, welche den Routen aus der vorhergehenden Schleife zugeordnet wurden, entspricht.

11. Steuersystem nach Anspruch 8, 9 oder 10, welches zum Übertragen von MPLS Paketen in einem MPLS Kommunikationsteilnetz ausgebildet ist

12. Steuersystem nach einem der Ansprüche 8 oder 11, welches zusammen mit der Messeinrichtung ferner in der Lage ist,

- zum Gleichsetzen eines jeweils ermittelten Ein-Wege-Performanz-Parameter-Eichwerts einer Route der Summe von Ein-Wege-Performanz-Parameter-Eichwerten von Übertragungsabschnitten, aus welchen sich diese Route zusammensetzt,
- zur Ermittlung eines Ein-Wege-Performanz-Parameter-Eichwertes oder eines Ein-Wege-Performanz-Parameters eines bestimmten Übertragungsabschnittes innerhalb einer Schleife bei einer Anzahl von n Übertragungsabschnitten innerhalb der Schleife, zum Festlegen der zu passierenden Routen derart, dass der bestimmte Übertragungsabschnitt innerhalb der Schleife wenigstens zweimal innerhalb verschiedener Routen auf dem Hin- und Rückweg zu passieren ist und in Bezug auf alle anderen Übertragungsabschnitte innerhalb dieser Schleife bereits auf zu dem zu ermittelnden Ein-Wege-Performanz-Parameter entsprechende Ein-Wege-Performanz Eichparamter für Routen zurückgegriffen werden kann, die diese anderen Übertragungsabschnitte enthalten,
- nach vollständigem Durchlaufen dieser Schleife zum Messen eines zu dem zu ermittelnden Ein-Wege-Performanz-Parameter gehörenden Performanz-Werts und zum Zuordnen dieses Werts der durchlaufenen Schleife insgesamt, und
- zum Berechnen des zu ermittelnden Ein-Wege-Performanz-Parameter-Eichwerts oder Ein-Wege-Performanz-Parameters des bestimmten Übertragungsabschnittes in funktionaler Abhängigkeit von dem gemessenen Performanz-Wert der gesamten durchlaufenen Schleife und den Ein-Wege-Performanz-Parameter-Eichwerten für die Routen, die diese anderen Übertragungsabschnitte enthalten.

13. Steuersystem nach einem der Ansprüche 8 bis 12, welches zusammen mit der Messeinrichtung ferner in der Lage ist,

- zur Ermittlung von Laufzeit-abhängigen Ein-Wege-Performanz-Parametern beim Versenden des Pakets auf einer Schleife, zum Zuordnen eines Zeitstempels zu diesem Paket und zum Auswerten dieses Zeitstempels nach Durchlaufen der Schleife.

## Claims

1. A method for determining one-way performance parameters when transmitting a packet in packet-switched communication subnetworks,

wherein the packet is transmitted on a loop starting from a sender to a destination and back to the sender, thereby passing through a number of routers ($ER_{origin}$, $ER_{destination1}$, $ER_{destination2}$, $IR_{11}$, $IR_{22}$), wherein a router may be an internal router or an edge router representing a transition between the communication subnetwork and a connected network or a termination of the communication subnetwork, and once the loop has been passed completely a measuring value is measured that is associated with the one-way performance parameter to be determined, which measuring value is assigned to said loop that has been passed as a whole; wherein all routes to be passed on the loop between any two particular routers within the loop are predefined

17

for a packet already prior to its transmission such that in case of a number of n routes within the loop it is already possible to have recourse to one-way performance calibration values with respect to n-1 routes within the loop, which correspond to the one-way performance parameters to be determined, and the one-way performance parameter to be determined with respect to the remaining route is calculated in functional dependence of the performance measuring value measured for the entire loop that has been passed and of the one-way performance calibration values of the n-1 routes.

2. The method for determining one-way performance parameters of a packet in packet-switched communication subnetworks according to claim 1,

wherein, for determining one-way performance calibration values, the packet is transmitted on at least one loop starting from a sender to a destination and back to the sender, thereby passing through a number of routers ($ER_{origin}$, $ER_{destination1}$, $ER_{destination2}$, $IR_{11}$, $IR_{22}$), wherein a router may be an internal router or an edge router representing a transition between the communication subnetwork and a connected network or a termination of the communication subnetwork;
wherein all routes to be passed on a loop between any two particular routers within the loop are predefined for a packet already prior to its transmission
such that the routes starting from the sender to the destination are also used as the routes from the destination back to the sender, and
such that in determining one-way performance parameter calibration values for a number of n routes, the packet is successively transmitted on n-1 loops;
wherein a first loop is defined for transmission of the packet, which includes only the first route out of the number of n routes both on the way out and on the way back, or only includes the last route out of the number of n routes both on the way out and on the way back, wherein once this loop has been passed, a performance measuring value associated with the one-way performance parameter to be determined is measured, which is assigned to said loop that has been passed as a whole, and wherein half the performance measuring value is assigned to the route that has been passed both for the way out and the way back; and
wherein each further loop which is defined until the number of n-1 loops is reached, includes a further route directly following the routes from the preceding loop out of the number of n routes both on the way out and on the way back, wherein once each respective one of said further loops has been passed, a respective performance measuring value which is associated with the one-way performance parameter to be determined is measured, which is assigned to the respective loop that has been passed as a whole, and wherein for the further route directly following the routes from the preceding loop, a respective one-way performance parameter calibration value is calculated in functional dependence of this measured performance measuring value and the one-way performance parameter calibration values which were assigned to the routes from the previous loop, and is assigned thereto, both for the way out and the way back.

3. A method for determining one-way performance parameters of a packet in packet-switched communication subnetworks,

wherein, for determining one-way performance calibration values, the packet is transmitted on at least one loop starting from a sender to a destination and back to the sender, thereby passing through a number of routeurs ($ER_{origin}$, $ER_{destination1}$, $ER_{destination2}$, $IR_{11}$, $IR_{22}$), wherein a router may be an internal router or an edge router representing a transition between the communication subnetwork and a connected network or a termination of the communication subnetwork;
wherein all routes to be passed on a loop between any two particular routers within the loop are predefined for a packet already prior to its transmission
such that the routes starting from the sender to the destination are also used as the routes from the destination back to the sender, and
such that in determining one-way performance parameter calibration values for a number of n routes, the packet is successively transmitted on n-1 loops;
wherein a first loop is defined for transmission of the packet, which includes only the first route out of the number of n routes both on the way out and on the way back, or only includes the last route out of the number of n routes both on the way out and on the way back, wherein once this loop has been passed, a performance measuring value associated with the one-way performance parameter to be determined is measured, which is assigned to said loop that has been passed as a whole, and wherein half the performance measuring value is assigned to the route that has been passed both for the way out and the way back; and
wherein each further loop which is defined until the number of n-1 loops is reached, includes a further route directly following the routes from the preceding loop out of the number of n routes both on the way out and on the way back, wherein once each respective one of said further loops has been passed, a respective performance measuring value which is associated with the one-way performance parameter to be determined is measured, which is assigned to the respective loop that has been passed as a whole, and wherein for the further route directly following the routes from the preceding loop, a respective one-way performance parameter calibration value is calculated in functional dependence of this measured performance measuring value and the one-way performance parameter calibration values which were assigned to the routes from the previous loop, and is assigned thereto, both for the way out and the way back.

4. The method according to claim 2 or 3, wherein a one-way performance parameter calibration value corresponding to half the difference of this measured performance value and the one-way performance parameter calibration values that were assigned to the routes of the previous loop is calculated and assigned as a respective one-way performance parameter calibration value.

5. The method according to any one of claims 1 to 4, which is used for determining one-way performance parameters of an MPLS packet in an MPLS communication subnetwork.

6. The method according to any one of claims 1 to 5,

wherein a respective determined one-way performance parameter calibration value of a route is equated to the total of one-way performance parameter values of transmission sections which make up this route; and wherein for determining a one-way performance parameter calibration value or a one-way performance parameter of a particular transmission section within a loop in case of a number of n transmission sections within the loop, this particular transmission section within a loop is passed at least twice within different routes on the way out and on the way back, so that once this loop has been passed completely, a performance value associated with the one-way performance parameter to be determined is measured and is assigned to this loop as a whole; and wherein for all other transmission sections within this loop, it is possible to have recourse to one-way performance calibration parameters corresponding to the one-way performance parameter to be determined of routes including these other transmission sections;
wherein the one-way performance parameter calibration value or the one-way performance parameter of the particular transmission section to be determined is calculated in functional dependence of the measured performance value of the entire loop that has been passed and of the one-way performance parameter calibration values of the routes that include these other transmission sections.

7. The method according to any one of claims 1 to 6,
wherein for determining runtime-dependent one-way performance parameters, the packet has a timestamp assigned thereto when the packet is transmitted on a loop, which timestamp is evaluated after the loop has been passed.

8. A packet control system for transmitting packets in packet-switched communication subnetworks,

which is configured for transmitting the packet on a loop starting from a sender to a destination and back to the sender such that the packet thereby passes through a number of routers ($ER_{origin}$, $ER_{destination1}$, $ER_{destination2}$, $IR_{11}$, $IR_{22}$), wherein a router may be an internal router or an edge router representing a transition between the communication subnetwork and a connected network or a termination of the communication subnetwork;
wherein, for determining one-way performance parameters of a packet, the control system comprises a measuring device which is directly connected to at least one router or is part of this one router, as a sender, and due to which the control system is able, once the loop has been passed completely, to measure a measuring value associated with the one-way performance parameter to be determined, and to assign said measuring value to this loop that has been passed as a whole; and
wherein the control system with the measuring device is furthermore able to predefine all routes to be passed on the loop between any two particular routers within the loop for a packet already prior to the transmission thereof such that in case of a number of n routes within the loop it is already possible to have recourse to one-way performance calibration values corresponding to the one-way performance parameter to be determined with respect to n-1 routes within the loop, and to calculate the one-way performance parameter to be determined with respect to the remaining route in functional dependence of the performance measuring value measured for the entire loop that has been passed and of the one-way performance calibration values of the n-1 routes.

9. A packet control system for transmitting packets in packet-switched communication subnetworks, wherein the control system comprises a measuring device for determining one-way performance parameters of a packet,

and is configured for determining one-way performance parameter calibration values, for transmitting the packet on at least one loop starting from a sender to a destination and back to the sender such that the packet thereby passes through a number of routeurs ($ER_{origin}$, $ER_{destination1}$, $ER_{destination2}$, $IR_{11}$, $IR_{22}$), wherein a router may be an internal router or an edge router representing a transition between the communication subnetwork and a connected network or a termination of the communication subnetwork;

wherein the measuring device is directly connected to at least one router or is part of said one (edge) router, as a sender, and wherein the control system with the measuring device is able to predefined all routes to be passed on a loop between any two routers within the loop for a packet already prior to the transmission thereof such that the routes starting from the sender to the destination are also used as the routes from the destination back to the sender, and in determining one-way performance parameter calibration values of a number of n routes, to successively transmit the packet on n-1 loops;

wherein the control system with the measuring device is able to define a first loop for transmitting the packet, which only includes the first route out of the number of n routes both on the way out and on the way back, or only includes the last route out of the number of n routes both on the way out and on the way back, and once said loop has been passed, to measure a performance value associated with the one-way performance parameter to be determined, and to assign this measuring value to said loop that has been passed as a whole, and half of the performance value to the route that has been passed both for the way out and for the way back; and

wherein the control system with the measuring device is able to define a respective further loop until the number of n-1 loops is reached, each of which includes a respective further route directly following the routes from the preceding loop out of the number of n routes both on the way out and on the way back, and once a respective one of said further loops has been passed, to measure a respective performance measuring value which is associated with the one-way performance parameter to be determined, and to assign this measuring value to the respective loop that has been passed as a whole, and to calculate for and assign to the further route directly following the routes from the preceding loop, both for the way out and the way back, a respective one-way performance parameter calibration value in functional dependence of this measured performance value and of the one-way performance parameter calibration values which were assigned to the routes from the previous loop.

10. The control system according to claim 8 and 9,
wherein the measuring device is furthermore configured to calculate and assign a one-way performance parameter calibration value corresponding to half the difference between said measured performance value and the one-way performance parameter calibration values assigned to the routes from the previous loop, as a respective one-way performance parameter calibration value.

11. The control system according to claim 8, 9 or 10, configured for transmitting MPLS packets in an MPLS communication subnetwork.

12. The control according to any one of claims 8 or 11, which together with the measuring device is furthermore able,
to equate a respective determined one-way performance parameter calibration value of a route to the total of one-way performance parameter calibration values of transmission sections which make up this route;

for determining a one-way performance parameter calibration value or a one-way performance parameter of a particular transmission section within a loop in case of a number of n transmission sections within the loop, to predefine the routes to be passed such that the particular transmission section within the loop is to be passed at least twice on different routes on the way out and on the way back, and such that with respect to all other transmission sections within this loop it is already possible to have recourse to one-way performance calibration parameters corresponding to the one-way performance parameter to be determined, of routes including these other transmission sections;

once said loop has been completely passed, to measure a performance value associated with the one-way performance parameter to be determined, and to assign said value to the said loop that has been passed as a whole; and to calculate the one-way performance parameter calibration value or the one-way performance parameter to be determined, of the particular transmission section, in functional dependence of the measured performance value of the entire loop that has been passed and of the one-way performance parameter calibration values of the routes that include these other transmission sections.

13. The control system according to any one of claims 8 to 12, which together with the measuring device is furthermore able,
for determining runtime-dependent one-way performance parameters, to assign a timestamp to the packet when transmitting said packet on a loop, and to evaluate said timestamp after the loop has been passed.

**Revendications**

1. Procédé de détermination de paramètres de performance unidirectionnelle lors de la transmission d'un paquet dans des sous-réseaux de communication à commutation par paquets,

- dans lequel le paquet est transmis sur une boucle d'un expéditeur à un objectif et à nouveau à l'expéditeur, et passe à cette occasion par un certain nombre de routeurs (KRUrsprung, KRZie11, KRZie12, IR11, IR22), où un routeur peut être un routeur interne ou un routeur de bordure, qui représente un passage entre le sous-réseau de communication et un réseau de connexion ou une terminaison du sous-réseau de communication, et, une fois la boucle entièrement parcourue, une valeur de mesure faisant partie du paramètre de performance unidirectionnelle à déterminer est mesurée, laquelle est associée à cette boucle parcourue dans son ensemble,

dans lequel toutes les routes par lesquelles le paquet doit passer sur la boucle entre respectivement deux routeurs définis à l'intérieur de la boucle pour un paquet sont déjà établies avant la transmission de celui-ci, de telle sorte que pour un nombre de n routes à l'intérieur de la boucle, par rapport aux n-1 routes à l'intérieur de la boucle, il est déjà possible d'avoir recours aux valeurs étalons de performance unidirectionnelle correspondant au paramètre de performance unidirectionnelle à déterminer, et le paramètre de performance unidirectionnelle à déterminer est calculé par rapport au reste de la route en fonction de la valeur de mesure de performance mesurée de la totalité de la boucle parcourue et des valeurs étalons de performance unidirectionnelle des n-1 routes.

2. Procédé de détermination de paramètres de performance unidirectionnelle d'un paquet dans des sous-réseaux de communication à commutation par paquets selon la revendication 1,

- dans lequel, pour la détermination des valeurs étalons de performance unidirectionnelle, le paquet sur au moins une boucle est transmis d'un expéditeur à un objectif et à nouveau à l'expéditeur, et passe à cette occasion par un certain nombre de routeurs (KRUrsprung, KRZie11, KRZie12, IR11, IR22), un routeur pouvant être un routeur interne ou un routeur de bordure, qui représente un passage entre le sous-réseau de communication et un réseau de connexion ou une terminaison du sous-réseau de communication, dans lequel toutes les routes par lesquelles le paquet doit passer sur une boucle entre respectivement deux routeurs définis à l'intérieur de la boucle pour un paquet sont déjà établies avant la transmission de celui-ci, de telle sorte

que les routes allant de l'expéditeur à l'objectif ainsi que les routes revenant de l'objectif à l'expéditeur sont utilisées, et

que lors de la détermination de valeurs étalons de paramètre de performance unidirectionnelle pour un nombre de n routes, le paquet est transmis successivement sur n-1 boucles,

- dans lequel une première boucle pour la transmission du paquet est définie, laquelle ne comporte que la première route parmi le nombre de n routes aussi bien sur le trajet aller que sur le trajet retour, ou laquelle ne comporte que la dernière route parmi le nombre de n routes sur le trajet aller et sur le trajet retour, dans lequel une fois cette boucle parcourue, une valeur de mesure de performance faisant partie du paramètre de performance unidirectionnelle à déterminer est mesurée, laquelle est associée à cette boucle parcourue dans son ensemble, et dans lequel la moitié de la valeur de mesure de performance est associée en tant que valeur étalon de paramètre de performance unidirectionnelle à la route par laquelle le paquet est passé aussi bien pour le trajet aller que pour le trajet retour, et

- dans lequel dans chaque autre boucle, laquelle est définie jusqu'au nombre de n-1 boucles, figure respectivement une autre route parmi le nombre de n routes, laquelle est raccordée aux routes de la boucle précédente, aussi bien sur le trajet aller que sur le trajet retour, dans lequel une fois chaque autre boucle parcourue, une valeur de mesure de performance faisant partie du paramètre de performance unidirectionnelle à déterminer est mesurée, laquelle est associée respectivement à la boucle parcourue dans son ensemble, et dans lequel aussi bien pour le trajet aller que pour le trajet retour, respectivement une valeur étalon de paramètre de performance unidirectionnelle est calculée et associée à l'autre route raccordée aux routes de la boucle précédente en fonction de cette valeur de mesure de performance mesurée et des valeurs étalons de paramètre de performance unidirectionnelle, lesquelles ont été associées aux routes de la boucle précédente.

3. Procédé de détermination de paramètres de performance unidirectionnelle d'un paquet dans des sous-réseaux de communication à commutation par paquets :

- dans lequel, pour la détermination de valeurs étalons de performance unidirectionnelle, le paquet est transmis sur au moins une boucle d'un expéditeur à un objectif et à nouveau à l'expéditeur, et passe à cette occasion par un certain nombre de routeurs (KRUrsprung, KRZiel1, KRZie12, IR11, IR22), un routeur pouvant être un routeur interne ou un routeur de bordure, qui représente un passage entre le sous-réseau de communication et un réseau de connexion ou une terminaison du sous-réseau de communication,

dans lequel toutes les routes par lesquelles le paquet doit passer sur une boucle entre respectivement deux routeurs définis à l'intérieur de la boucle pour un paquet sont déjà établies avant la transmission de celui-ci, de telle sorte

que les routes allant de l'expéditeur à l'objectif ainsi que les routes revenant de l'objectif à l'expéditeur sont utilisées, et

que lors de la détermination de valeurs étalons de paramètre de performance unidirectionnelle pour un nombre de n routes, le paquet est transmis successivement sur n-1 boucles,

- dans lequel une première boucle pour la transmission du paquet est définie, laquelle ne comporte que la première route parmi le nombre de n routes aussi bien sur le trajet aller que sur le trajet retour, ou laquelle ne comporte que la dernière route parmi le nombre de n routes sur le trajet aller et sur le trajet retour, dans lequel une fois cette boucle parcourue, une valeur de mesure de performance faisant partie du paramètre de performance unidirectionnelle à déterminer est mesurée, laquelle est associée à cette boucle parcourue dans son ensemble, et dans lequel la moitié de la valeur de mesure de performance est associée en tant que valeur étalon de paramètre de performance unidirectionnelle à la route par laquelle le paquet doit passer aussi bien pour le trajet aller que pour le trajet retour, et

- dans lequel dans chaque autre boucle, laquelle est définie jusqu'au nombre de n-1 boucles, respectivement une autre route parmi le nombre de n routes raccordée aux routes de la boucle précédente figure aussi bien sur le trajet aller que sur le trajet retour, dans lequel une fois chaque autre boucle parcourue, une valeur de mesure de performance faisant partie du paramètre de performance unidirectionnelle à déterminer est mesurée, laquelle est associée respectivement à la boucle parcourue dans son ensemble, et dans lequel aussi bien pour le trajet aller que pour le trajet retour, respectivement une valeur étalon de paramètre de performance unidirectionnelle est calculée et associée à l'autre route raccordée aux routes de la boucle précédente en fonction de cette valeur de mesure de performance mesurée et des valeurs étalons de paramètre de performance unidirectionnelle, lesquelles ont été associées aux routes de la boucle précédente.

4. Procédé selon la revendication 2 ou 3, dans lequel une valeur étalon de paramètre de performance unidirectionnelle est calculée et associée respectivement en tant que valeur étalon de paramètre de performance unidirectionnelle, laquelle correspond à la moitié de la différence entre cette valeur de performance mesurée et les valeurs étalons de paramètre de performance unidirectionnelle, lesquelles ont été associées aux routes de la boucle précédente.

5. Procédé selon l'une quelconque des revendications 1 à 4, lequel est utilisé pour déterminer des paramètres de performance unidirectionnelle d'un paquet MPLS dans un sous-réseau de communication MPLS.

6. Procédé selon l'une quelconque des revendications 1 à 5,

- dans lequel une valeur étalon de paramètre de performance unidirectionnelle respectivement déterminée d'une route, de la somme des valeurs étalons de paramètre de performance unidirectionnelle de sections de transmission dont se compose cette route, est égalisée, et

- dans lequel, pour la détermination d'une valeur étalon de paramètre de performance unidirectionnelle ou d'un paramètre de performance unidirectionnelle d'une section de transmission définie à l'intérieur d'une boucle pour un nombre de n sections de transmission à l'intérieur de la boucle, cette section de transmission définie est amenée à passer à l'intérieur d'une boucle au moins deux fois à l'intérieur de différentes routes sur le trajet aller et le trajet retour, de sorte qu'une fois cette boucle entièrement parcourue, une valeur de performance faisant partie du paramètre de performance unidirectionnelle à déterminer est mesurée, laquelle est associée à cette boucle parcourue dans son ensemble,

et dans lequel par rapport aux autres sections de transmission à l'intérieur de cette boucle, il est déjà possible d'avoir recours aux paramètres étalons de performance unidirectionnelle correspondant au paramètre de performance unidirectionnelle à déterminer, pour des routes qui contiennent ces autres sections de transmission,

- dans lequel la valeur étalon de paramètre de performance unidirectionnelle ou le paramètre de performance unidirectionnelle à déterminer de la section de transmission définie est calculé(e) en fonction de la valeur de performance mesurée de la totalité de la boucle parcourue et des valeurs étalons de paramètre de performance unidirectionnelle pour les routes qui contiennent ces autres sections de transmission.

**7.** Procédé selon l'une quelconque des revendications 1 à 6, dans lequel, pour la détermination de paramètres de performance unidirectionnelle dépendant de la durée de parcours, lors de l'émission du paquet sur une boucle, une estampille temporelle évaluée une fois la boucle parcourue est associée à ce paquet.

**8.** Système de commande de paquet pour la transmission de paquets dans des sous-réseaux de communication à commutation par paquets,

- lequel est conçu pour transmettre le paquet sur une boucle d'un expéditeur à un objectif et à nouveau à l'expéditeur, et ce pour faire passer le paquet à cette occasion par un certain nombre de routeurs (KRUrsprung, KRZie11, KRZie12, Ir11, IR22), un routeur pouvant être un routeur interne ou un routeur de bordure, qui représente un passage entre le sous-réseau de communication et un réseau de connexion ou une terminaison du sous-réseau de communication,
- le système de commande, pour la détermination de paramètres de performance unidirectionnelle d'un paquet, possédant un dispositif de mesure qui, en tant qu'expéditeur, est raccordé directement à au moins un routeur ou fait partie d'un de ces routeurs, et au moyen duquel le système de commande est en mesure, une fois la boucle entièrement parcourue, de mesurer une valeur de mesure faisant partie du paramètre de performance unidirectionnelle à déterminer et d'associer cette valeur de mesure à cette boucle parcourue dans son ensemble, et

le système de commande, et avec lui le dispositif de mesure, étant en outre en mesure d'établir toutes les routes par lesquelles le paquet doit passer sur la boucle entre respectivement deux routeurs définis à l'intérieur de la boucle pour un paquet déjà avant la transmission de celui-ci, de telle sorte que, pour un nombre de n routes à l'intérieur de la boucle, par rapport au n-1 routes à l'intérieur de la boucle, il est déjà possible d'avoir recours aux valeurs étalons de performance unidirectionnelle correspondant au paramètre de performance unidirectionnelle à déterminer, et de calculer le paramètre de performance unidirectionnelle à déterminer par rapport au reste de la route en fonction de la valeur de mesure de performance mesurée de la totalité de la boucle parcourue et des valeurs étalons de performance unidirectionnelle des n-1 routes.

**9.** Système de commande de paquet pour la transmission de paquets dans des sous-réseaux de communication à commutation par paquets, le système de commande, pour la détermination de paramètres de performance unidirectionnelle d'un paquet, possédant un dispositif de mesure

- et, pour la détermination de valeurs étalons de paramètre de performance unidirectionnelle, étant conçu pour transmettre le paquet sur au moins une boucle d'un expéditeur à un objectif et à nouveau à l'expéditeur, et ce pour faire passer à cette occasion le paquet par un certain nombre de routeurs (KRUrsprung, KRZie11, KRZie12, IR11, IR22), un routeur pouvant être un routeur interne ou un routeur de bordure, qui représente un passage entre le sous-réseau de communication et un réseau de connexion ou une terminaison du sous-réseau de communication,
- dans lequel le dispositif de mesure en tant qu'expéditeur est raccordé directement à au moins un routeur ou fait partie d'un de ces routeurs (de bordure), et le système de commande, et avec lui le dispositif de mesure, étant en mesure d'établir toutes les routes par lesquelles le paquet doit passer sur une boucle entre respectivement deux routeurs à l'intérieur de la boucle pour un paquet, déjà avant la transmission de celui-ci, de telle manière

que les routes allant de l'expéditeur à l'objectif ainsi que les routes revenant de l'objectif à l'expéditeur sont utilisées,

et, lors de la détermination de valeurs étalons de paramètre de performance unidirectionnelle, pour un nombre de n routes, de transmettre le paquet successivement sur n-1 boucles,

- le système de commande, et avec lui le dispositif de mesure, étant en mesure de définir une première boucle pour la transmission du paquet, laquelle ne comporte que la première route parmi les n routes aussi bien sur le trajet aller que sur le trajet retour, ou laquelle ne comporte que la dernière route parmi le nombre de n'routes sur le trajet aller et sur le trajet retour, et une fois cette boucle parcourue, de mesurer une valeur de performance faisant partie du paramètre de performance unidirectionnelle à déterminer, et d'associer cette valeur de mesure à la boucle parcourue dans son ensemble et la moitié de la valeur de performance en tant que valeur étalon de paramètre de performance unidirectionnelle à la route par laquelle le paquet est passé, aussi bien pour le trajet aller que pour le trajet retour, et

- le système de commande, et avec lui le dispositif de mesure, étant en mesure de définir une autre boucle respective jusqu'au nombre de n-1 boucles, laquelle comporte respectivement une autre route parmi le nombre de n routes, laquelle est raccordée aux routes de la boucle précédente, aussi bien sur le trajet aller que sur le trajet retour, et, une fois chaque autre boucle parcourue, de mesurer une valeur de mesure de performance faisant partie du paramètre de performance unidirectionnelle à déterminer et d'associer cette valeur de mesure à la boucle respectivement parcourue dans son ensemble et, aussi bien pour le trajet aller que pour le trajet retour, de calculer et d'associer respectivement une valeur étalon de paramètre de performance unidirectionnelle à l'autre route raccordée aux routes de la boucle précédente, et ce en fonction de cette valeur de mesure de performance mesurée et des valeurs étalons de paramètre de performance unidirectionnelle, lesquelles ont été associées aux routes de la boucle précédente.

10. Système de commande selon les revendications 8 et 9,
dans lequel le dispositif de mesure est conçu en outre pour calculer et associer respectivement en tant que valeur étalon de paramètre de performance unidirectionnelle une valeur étalon de paramètre de performance unidirectionnelle qui correspond à la moitié de la différence entre cette valeur de performance mesurée et les valeurs étalons de paramètre de performance unidirectionnelle, lesquelles ont été associées aux routes de la boucle précédente.

11. Système de commande selon la revendication 8, 9 ou 10, lequel est conçu pour transmettre des paquets MPLS dans un sous-réseau de communication MPLS.

12. Système de commande selon l'une quelconque des revendications 8 ou 11, lequel est en outre en mesure, conjointement avec le dispositif de mesure,

- d'égaliser une valeur étalon de paramètre de performance unidirectionnelle respectivement déterminée d'une route, de la somme des valeurs étalons de paramètre de performance unidirectionnelle de sections de transmission, dont se compose cette route,
- pour la détermination d'une valeur étalon de paramètre de performance unidirectionnelle ou d'un paramètre de performance unidirectionnelle d'une section de transmission définie à l'intérieur d'une boucle pour un nombre de n sections de transmission à l'intérieur de la boucle, d'établir les routes par lesquelles le paquet doit passer, de telle manière que la section de transmission définie est amenée à passer à l'intérieur de la boucle au moins deux fois à l'intérieur de différentes routes sur le trajet aller et le trajet retour et, par rapport à toutes les sections de transmission à l'intérieur de cette boucle, il est déjà possible d'avoir recours aux paramètres étalons de performance unidirectionnelle correspondant au paramètre de performance unidirectionnelle à déterminer pour des routes qui contiennent ces autres sections de transmission,
- une fois cette boucle entièrement parcourue, de mesurer une valeur de performance faisant partie du paramètre de performance unidirectionnelle à déterminer et d'associer cette valeur à la boucle parcourue dans son ensemble, et
- de calculer la valeur étalon de paramètre de performance unidirectionnelle ou le paramètre de performance unidirectionnelle à déterminer de la section de transmission définie en fonction de la valeur de performance mesurée de la totalité de la boucle parcourue et des valeurs étalons de paramètre de performance unidirectionnelle pour les routes qui contiennent ces autres sections de transmission.

13. Système de commande selon l'une quelconque des revendications 8 à 12, lequel, conjointement avec le dispositif de mesure, est en outre en mesure :

- pour la détermination de paramètres de performance unidirectionnelle dépendant de la durée de parcours, lors de l'émission du paquet sur une boucle, d'associer une estampille temporelle à ce paquet et d'évaluer cette estampille temporelle une fois la boucle parcourue.

Fig. 1

Fig. 2

# Fig. 3

$LZ1 = LZa + LZc + LZc + LZa$

**EP 2 822 224 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012110011 A2

**In der Beschreibung aufgeführte Nicht-Patentliteratur**

- IP (Internet Protocol) Performance Metrics Work Group. IETF (Internet Engineering Task Force)
- PAXSON, D. ; ALMES, G. ; MAHDAVI, J. ; M. MA-THIS. Framework for IP Performance Metrics. *RFC 2330,* Mai 1998
- G. SWALLOW ; S. BRYANT ; L. ANDERSSON. Avoiding Equal Cost Multipath Treatment in MPLS Networks. *BCP 128 / RFC 4928,* Juni 2007
- R. GEIB ; A. MORTON ; R. FARDID ; A. STEIN-MITZ. IP Performance Metrics (IPPM) Standard Advancement Testing. *BCP 176 / RFC 6576,* Marz 2012
- G. ALMES ; S. KALIDINDI ; M. ZEKAUSKAS. A Round-trip Delay Metric for IPPM. *RFC 2681,* September 1999
- B. DAVIE ; A. CHARNY. An Expedited Forwarding PHB (Per-Hop Behavior). *RFC 3246,* Marz 2002
- J. HEINANEN ; F.BAKER. Assured Forwarding PHB Group. *RFC2597,* Juni 1999